(19)

Europäisches
Patentamt
European
Patent Office
Office européen
des brevets

(11) **EP 4 290 459 A1**

(12) **EUROPEAN PATENT APPLICATION**
published in accordance with Art. 153(4) EPC

(43) Date of publication:
**13.12.2023 Bulletin 2023/50**

(51) International Patent Classification (IPC):
***G06T 7/73*** (2017.01)

(21) Application number: **22758967.8**

(22) Date of filing: **25.02.2022**

(86) International application number:
**PCT/CN2022/077902**

(87) International publication number:
**WO 2022/179603 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.02.2021 CN 202110221723**

(71) Applicant: **Huawei Technologies Co., Ltd.
Shenzhen, Guangdong 518129 (CN)**

(72) Inventors:
• **LI, Zhihao**
 **Shenzhen, Guangdong 518129 (CN)**
• **SHAO, Bin**
 **Shenzhen, Guangdong 518129 (CN)**
• **WU, Xiaofei**
 **Shenzhen, Guangdong 518129 (CN)**
• **ZHANG, Zhensong**
 **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **AUGMENTED REALITY METHOD AND RELATED DEVICE THEREOF**

(57) This application provides an augmented reality method and a related apparatus, to dynamically associate an orientation of a virtual object with an orientation of a real object. In this way, the real object and the virtual object presented in a target image are combined more realistically, and user experience is improved. The method in this application includes: obtaining a target image shot by a camera and first location information of a first object in the target image; obtaining second location information of a second object in a three-dimensional coordinate system and third location information of a third object in the three-dimensional coordinate system, where the second object is a reference object of the first object; obtaining a pose variation of the first object relative to the second object based on the first location information and the second location information; transforming the third location information based on the pose variation, to obtain fourth location information of the third object in the three-dimensional coordinate system; and rendering the third object in the target image based on the fourth location information, to obtain a new target image.

FIG. 4

EP 4 290 459 A1

## Description

This application claims priority to Chinese Patent Application No. 202110221723.4, filed with the China National Intellectual Property Administration on February 27, 2021 and entitled "AUGMENTED REALITY METHOD AND RELATED DEVICE", which is incorporated herein by reference in its entirety.

## TECHNICAL FIELD

This application relates to the field of computer vision technologies, and in particular, to an augmented reality method and a related device.

## BACKGROUND

Augmented reality (augmented reality, AR) technologies can accurately "embed" virtual objects that do not exist in a real environment into the real environment, so that the virtual objects and the real environment are integrated. This presents a new environment with real sensory effect to a user, to implement reality augmentation.

Currently, in the AR technologies, one virtual object may be additionally rendered on an image that presents a real environment, to obtain a new image for the user to view and use. For example, a target image presents a human in a room. According to a user requirement, one virtual wing may be added behind the human, so that a new target image presents more vivid and interesting content.

An orientation of a real object presented by the target image is usually not fixed, but changes with a shooting angle of a camera or motion of the real object. For example, when the real object faces the camera frontally or sideways, or a back of the real object faces the camera, orientations presented on the target image are different. However, orientations of the virtual object rendered by using the current AR technologies are fixed. In other words, the orientation of the virtual object cannot change with the orientation of the real object. Consequently, the target image cannot present realistic content, and user experience is poor.

## SUMMARY

Embodiments of this application provide an augmented reality method and a related device, to dynamically associate an orientation of a virtual object with an orientation of a real object. This allows a target image to present realistic content, and improves user experience.

A first aspect of embodiments of this application provides an augmented reality method. The method includes: in response to a request of a user for adding a virtual object to a target image that presents a real environment, obtaining a target image shot by a camera. The real environment presented by the target image includes a plurality of real objects (in other words, the target image includes images of the plurality of real objects), for example, a human, a tree, and a house. The plurality of real objects include a first object. For example, the first object may be a real object that the user focuses on. Further, a to-be-added virtual object may be further considered as a third object, and a reference object of the real object is considered as a second object. For example, if the user wants to add one virtual wing to the real human in the target image, the user may use a three-dimensional standard human model as a reference object of the real human.

Then, first location information of the first object in the target image (which may be understood as a two-dimensional coordinate system constructed based on the target image, namely, an image coordinate system), second location information of the second object in a three-dimensional coordinate system (namely, a camera coordinate system) corresponding to the camera, and third location information of the third object in the camera coordinate system are obtained. The second location information and the third location information are preset and associated information. Still as in the foregoing example, in the camera coordinate system, the standard human model may be preset at one specific location and be preset with one orientation, and the wing is also preset at another location and be preset with one orientation (the orientations preset for the model and the wing are usually the same or similar). Therefore, the second location information of the standard human model in the camera coordinate system and the third location information of the wing in the camera coordinate system may be obtained. The second location information includes three-dimensional coordinates of each surface point of the standard human model in the camera coordinate system. The third location information includes three-dimensional coordinates of each surface point of the wing in the camera coordinate system. In addition, because the real human occupies a specific location in the target image, the first location information of the real human in the image coordinate system may be further obtained. The first location information includes two-dimensional coordinates of each surface point of the real human in the target image.

Then, because the second object is a reference object of the first object, a pose variation of the first object relative to the second object may be determined based on the second location information of the second object and the first location information of the first object. The pose variation indicates a location change between the second object and the first object and an orientation change between the second object and the first object in the camera coordinate system. Still as in the foregoing example, a pose variation of the real human relative to the standard human model may be determined by calculating based on the second location information of the standard human model and the first location information of the real human. The pose variation indicates both a location change and an orientation change between the real human and the standard human model in the camera coordinate system.

The pose variation of the first object relative to the second object indicates both the location change and the orientation change from the second object to the first object in the camera coordinate system. Therefore, fourth location information of the third object in the camera coordinate system may be determined based on the pose variation and the third location information of the third object, that is, a final location and a final orientation of the third object are determined. Still as in the foregoing example, after the pose variation of the real human is obtained, the fourth location information of the wing may be calculated based on the pose variation and the third location information of the wing. To be specific, the wing is translated from an original location of the wing to a final location, and the wing is rotated from an original orientation of the wing to a final orientation. It can be learned that rotation and translation operations on the wing are the same as rotation and translation operations for transforming the standard human model into the real human.

Finally, the third object is rendered in the target image based on the fourth location information of the third object, to obtain a new target image. In this way, the new target image may present both the third object and the first object, to meet a user requirement. Still as in the foregoing example, after the fourth location information of the wing is obtained, the wing may be rendered in the target image based on the fourth location information of the wing. In this way, the wing may be displayed near the real human in the target image, and the orientation of the real human is dynamically associated with the orientation of the wing, to meet a user requirement.

It can be learned from the foregoing method that when the third object needs to be added to the target image, the second location information of the second object in the camera coordinate system, the third location information of the third object in the camera coordinate system, and the first location information of the first object in the target image in the image coordinate system may be first obtained. The second location information and the third location information are preset information. Because the second object is a reference object of the first object, a pose variation of the first object relative to the second object may be determined based on the second location information and the first location information. The pose variation indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object may be associated with the orientation of the first object (for example, orientations of the third object and the first object are the same or similar). Finally, the third object is rendered in the target image based on the fourth location information. In an obtained new target image, an orientation of the third object may adapt to the orientation of the first object. This can present realistic content, and improve user experience.

In a possible implementation, the determining a pose variation of the first object relative to the second object based on the second location information of the second object and the first location information of the first object includes: obtaining depth information of the first object. The depth information indicates a distance from the first object to the camera. Then, the fifth location information of the first object in the camera coordinate system is determined based on the first location information of the first object in the image coordinate system and the depth information of the first object. Finally, a variation between the second location information of the second object in the camera coordinate system and the fifth location information of the first object in the camera coordinate system is calculated, to accurately obtain the pose variation of the first object relative to the second object.

In a possible implementation, the determining a pose variation of the first object relative to the second object based on the second location information of the second object and the first location information of the first object includes: transforming the second location information of the second object in the camera coordinate system (equivalent to performing rotation and translation operations on the second object), to obtain fifth location information of the first object in the camera coordinate system. Then, the fifth location information of the first object in the camera coordinate system is projected to the image coordinate system (in other words, the target image), to obtain sixth location information of the first object in the image coordinate system. Finally, if a variation between the sixth location information and the first location information meets a preset condition, the transformation matrix for transforming the second location information of the second object in the camera coordinate system is determined as the pose variation of the first object relative to the second object.

In a possible implementation, the rendering the third object in the target image based on the fourth location information of the third object in the camera coordinate system, to obtain a new target image includes: first performing pinhole imaging based on the fourth location information of the third object in the camera coordinate system, to obtain an image of the third object. Then, an occlusion relationship between the third object and the first object is obtained. Finally, the image of the third object and an image of the first object are fused based on the occlusion relationship, to obtain the new target image. In the foregoing implementation, when the image of the third object is fused into the target image, because the occlusion relationship between the third object and the first object is considered, the new target image can correctly present a relative location relationship between the third object and the first object. In this way, content presented by the new target image is more realistic. This further improves user experience.

In a possible implementation, the obtaining an occlusion relationship between the third object and the first object includes: first calculating a first distance between the first object and an origin of the camera coordinate system based on the fifth location information of the first object in the camera coordinate system. Then, a second distance between the third object and the origin of the camera coordinate system is calculated based on the fourth location information of the third object in the camera coordinate system. Finally, the first distance is compared with the second distance, to accurately obtain the occlusion relationship between the third object and the first object. For example, if the first distance is less than or equal to the second distance, the third object is occluded by the first object; or if the first distance is greater than the second distance, the first object is occluded by the third object.

In a possible implementation, the obtaining an occlusion relationship between the third object and the first object includes: first obtaining a correspondence between a plurality of surface points of the first object and a plurality of surface points of the second object. Then, distribution of the plurality of surface points of the first object on the second object is determined based on the correspondence. Finally, the occlusion relationship between the third object and the first object is determined based on the distribution. For example, in all surface points of the first object, if a quantity of surface points on the front face of the second object is greater than or equal to a quantity of surface points on the back face of the second object, the third object is occluded by the first object; or if a quantity of surface points on the front face of the second object is less than a quantity of surface points on the back face of the second object, the first object is occluded by the third object.

In a possible implementation, the pose variation of the first object relative to the second object includes a location of the first object and an orientation of the first object. The obtaining an occlusion relationship between the third object and the first object includes: first determining a front face of the first object based on the orientation of the first object. Then, the occlusion relationship between the third object and the first object is determined based on an included angle between an orientation of the first object and an orientation from a central point of the front face of the first object to the origin of the camera coordinate system. For example, if the included angle is less than or equal to 90°, the third object is occluded by the first object; or if the included angle is greater than 90°, the first object is occluded by the third object.

In a possible implementation, based on the occlusion relationship, the method further includes: inputting the target image into a first neural network, to obtain the image of the first object.

A second aspect of embodiments of this application provides an augmented reality method. The method includes: obtaining a target image and third location information of a third object in a camera coordinate system, where the target image includes an image of a first object; inputting the target image into a second neural network, to obtain a pose variation of the first object relative to a second object, where the second neural network is obtained through training based on second location information of the second object in the camera coordinate system, the second object is a reference object of the first object, and the second location information and the third location information are preset information; determining the fourth location information of the third object in the camera coordinate system based on the pose variation and the third location information; and rendering the third object in the target image based on the fourth location information, to obtain a new target image.

It can be learned from the foregoing method that when the third object needs to be added to the target image, the target image and the third location information of the third object in the camera coordinate system may be first obtained. The target image includes the image of the first object. Then, the target image is input into a second neural network, to obtain a pose variation of the first object relative to a second object. The second neural network is obtained through training based on second location information of the second object in the camera coordinate system. The second object is a reference object of the first object. The second location information and the third location information are preset information. Specifically, the pose variation of the first object relative to the second object indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object is associated with the orientation of the first object. Finally, the third object is rendered in the target image based on the fourth location information. In an obtained new target image, an orientation of the third object may adapt to the orientation of the first object. This can present realistic content, and improve user experience.

In a possible implementation, the rendering the third object in the target image based on the fourth location information, to obtain a new target image includes: performing pinhole imaging based on the fourth location information, to obtain an image of the third object; obtaining an occlusion relationship between the third object and the first object; and fusing the image of the third object and the image of the first object based on the occlusion relationship, to obtain the new target image.

In a possible implementation, the method further includes: transforming the second location information based on the pose variation, to obtain fifth location information of the first object in the three-dimensional coordinate system corresponding to a camera.

In a possible implementation, the obtaining an occlusion relationship between the third object and the first object includes: calculating a first distance between the first object and an origin of the three-dimensional coordinate system based on the fifth location information; calculating a second distance between the third object and the origin of the three-dimensional coordinate system based on the fourth location information; and comparing the first distance with the second distance, to obtain the occlusion relationship between the third object and the first object.

In a possible implementation, the pose variation includes a change of an orientation of the first object relative to the second object, and the obtaining an occlusion relationship between the third object and the first object includes: determining a front face of the first object based on the orientation change of the first object relative to the second object; and obtaining the occlusion relationship between the third object and the first object based on an included angle between an orientation of the first object and an orientation from a central point of the front face of the first object to an origin of the three-dimensional coordinate system.

In a possible implementation, based on the occlusion relationship, the method further includes: inputting the target image into a first neural network, to obtain the image of the first obj ect.

A third aspect of embodiments of this application provides a model training method. The method includes: obtaining a to-be-trained image, where the to-be-trained image includes an image of a first object; inputting the to-be-trained image into a to-be-trained model, to obtain a pose variation of the first object relative to a second object; calculating a deviation between the pose variation of the first object relative to the second object and a real pose variation of the first object based on a preset target loss function, where the real pose variation of the first object is determined based on second location information of the second object in a camera coordinate system, the second object is a reference object of the first object, and the second location information is preset information; and updating, based on the deviation, a parameter of the to-be-trained model until a model training condition is met, to obtain a second neural network.

It can be learned from the foregoing method that the pose variation of the object in the target image can be accurately obtained by using the second neural network obtained through training by using the method.

A fourth aspect of embodiments of this application provides a model training method. The method includes: obtaining a to-be-trained image; obtaining an image of a first obj ect by using a to-be-trained model; calculating a deviation between the image of the first object and a real image of the first object based on a preset target loss function; and updating, based on the deviation, a parameter of the to-be-trained model until a model training condition is met, to obtain a first neural network.

It can be learned from the foregoing method that the image of the first object in the target image can be accurately obtained by using the first neural network obtained through training by using the method.

A fifth aspect of embodiments of this application provides an augmented reality apparatus. The apparatus includes: a first obtaining module, configured to obtain a target image shot by a camera and first location information of a first object in the target image; a second obtaining module, configured to obtain second location information of a second object in a three-dimensional coordinate system and third location information of a third object in the three-dimensional coordinate system, where the second object is a reference object of the first object, and the second location information and the third location information are preset information; a third obtaining module, configured to obtain a pose variation of the first object relative to the second object based on the first location information and the second location information; a transformation module, configured to transform the third location information based on the pose variation, to obtain fourth location information of the third object in the three-dimensional coordinate system; and a rendering module, configured to render the third obj ect in the target image based on the fourth location information, to obtain a new target image.

It can be learned from the foregoing apparatus that when the third object needs to be added to the target image, the second location information of the second object in the camera coordinate system, the third location information of the third object in the camera coordinate system, and the first location information of the first object in the target image in the image coordinate system may be first obtained. The second location information and the third location information are preset information. Because the second object is a reference object of the first object, a pose variation of the first object relative to the second object may be determined based on the second location information and the first location information. The pose variation indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object may be associated with the orientation of the first object (for example, orientations of the third object and the first object are the same or similar). Finally, the third object is rendered in the target image based on the fourth location information. In an obtained new target image, an orientation of the third object may adapt to the orientation of the first object. This can present realistic content, and improve user experience.

In a possible implementation, the third obtaining module is configured to: obtain depth information of the first object; obtain fifth location information of the first object in the three-dimensional coordinate system based on the first location information and the depth information; and calculate a variation between the second location information and the fifth location information, to obtain the pose variation of the first object relative to the second object.

In a possible implementation, the third obtaining module is configured to: transform the second location information, to obtain fifth location information of the first object in the three-dimensional coordinate system; and project the fifth location information to the target image, to obtain sixth location information. If a variation between the sixth location information and the first location information meets a preset condition, the pose variation of the first object relative to the second object is the transformation matrix for transforming the second location information.

In a possible implementation, the rendering module is configured to: perform pinhole imaging based on the fourth location information, to obtain an image of the third object; obtain an occlusion relationship between the third object and the first object; and fuse the image of the third object and an image of the first object based on the occlusion relationship, to obtain the new target image.

In a possible implementation, the rendering module is configured to: calculate a first distance between the first object and an origin of the three-dimensional coordinate system based on the fifth location information; calculate a second distance between the third object and the origin of the three-dimensional coordinate system based on the fourth location information; and compare the first distance with the second distance, to obtain the occlusion relationship between the third object and the first object.

In a possible implementation, the rendering module is configured to: obtain a correspondence between a plurality of surface points of the first object and a plurality of surface points of the second object; obtain distribution of the plurality of surface points of the first object on the second object based on the correspondence; and obtain the occlusion relationship between the third object and the first object based on the distribution.

In a possible implementation, the pose variation includes an orientation change of the first object relative to the second object, and the rendering module is configured to: determine a front face of the first object based on the orientation change of the first object relative to the second object; and obtain the occlusion relationship between the third object and the first object based on an included angle between an orientation of the first object and an orientation from a central point of the front face of the first object to an origin of the three-dimensional coordinate system.

In a possible implementation, the rendering module is further configured to input the target image into a first neural network, to obtain the image of the first object.

A sixth aspect of embodiments of this application provides an augmented reality apparatus. The apparatus includes: a first obtaining module, configured to obtain a target image shot by a camera and third location information of a third object in a three-dimensional coordinate system corresponding to the camera, where the target image includes an image of a first object; a second obtaining module, configured to input the target image into a second neural network, to obtain a pose variation of the first object relative to a second object, where the second neural network is obtained through training based on second location information of the second object in the three-dimensional coordinate system, the second object is a reference object of the first object, and the second location information and the third location information are preset information; a transformation module, configured to transform the third location information based on the pose variation, to obtain fourth location information of the third object in the three-dimensional coordinate system; and a rendering module, configured to render the third object in the target image based on the fourth location information, to obtain a new target image.

It can be learned from the foregoing apparatus that when the third object needs to be added to the target image, the target image and the third location information of the third object in the camera coordinate system may be first obtained. The target image includes the image of the first object. Then, the target image is input into a second neural network, to obtain a pose variation of the first object relative to a second object. The second neural network is obtained through training based on second location information of the second object in the camera coordinate system. The second object is a reference object of the first object. The second location information and the third location information are preset information. Specifically, the pose variation of the first object relative to the second object indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object is associated with the orientation of the first object. Finally, the third object is rendered in the target image based on the fourth location information. In an obtained new target image, an orientation of the third object may adapt to the orientation of the first object. This can present realistic content, and improve user experience.

In a possible implementation, the rendering module is configured to: perform pinhole imaging based on the fourth location information, to obtain an image of the third object; obtain an occlusion relationship between the third object and the first object; and fuse the image of the third object and the image of the first object based on the occlusion relationship, to obtain the new target image.

In a possible implementation, the transformation module is further configured to transform the second location information based on the pose variation, to obtain fifth location information of the first object in the three-dimensional coordinate system corresponding to a camera.

In a possible implementation, the rendering module is configured to: calculate a first distance between the first object and an origin of the three-dimensional coordinate system based on the fifth location information; calculate a second distance between the third object and the origin of the three-dimensional coordinate system based on the fourth location information; and compare the first distance with the second distance, to obtain the occlusion relationship between the third object and the first object.

In a possible implementation, the pose variation includes an orientation change of the first object relative to the second object, and the rendering module is configured to: determine a front face of the first object based on the orientation change of the first object relative to the second object; and obtain the occlusion relationship between the third object and the first object based on an included angle between an orientation of the first object and an orientation from a central point of the front face of the first object to an origin of the three-dimensional coordinate system.

In a possible implementation, the rendering module is further configured to input the target image into a first neural network, to obtain the image of the first object.

A seventh aspect of embodiments of this application provides a model training apparatus. The apparatus includes: an obtaining module, configured to obtain a to-be-trained image, where the to-be-trained image includes an image of a first object; a determining module, configured to input the to-be-trained image into a to-be-trained model, to obtain a pose variation of the first object relative to a second object; a calculation module, configured to calculate a deviation between the pose variation of the first object relative to the second object and a real pose variation of the first object based on a preset target loss function, where the real pose variation of the first object is determined based on second location information of the second object in a camera coordinate system, the second object is a reference object of the first object, and the second location information is preset information; and an update module, configured to update, based on the deviation, a parameter of the to-be-trained model until a model training condition is met, to obtain a second neural network.

It can be learned from the foregoing apparatus that the pose variation of the object in the target image can be accurately obtained by using the second neural network obtained through training by using the apparatus.

An eighth aspect of embodiments of this application provides a model training apparatus. The apparatus includes: a first obtaining module, configured to obtain a to-be-trained image; a second obtaining module, configured to obtain an image of a first object by using a to-be-trained model; a calculation module, configured to calculate a deviation between the image of the first object and a real image of the first object based on a preset target loss function; and an update module, configured to update, based on the deviation, a parameter of the to-be-trained model until a model training condition is met, to obtain a first neural network.

It can be learned from the foregoing apparatus that the image of the first object in the target image can be accurately obtained by using the first neural network obtained through training by using the apparatus.

A ninth aspect of embodiments of this application provides an image processing method. The method includes: In response to a first operation of a user, a terminal device displays a target image. A first object is presented in the target image, and the first object is an object in a real environment. For example, after a user operates the terminal device, the terminal device may display the target image that presents a human who is dancing.

In response to a second operation of the user, the terminal device presents a virtual object in the target image. The virtual object is overlaid on the first object. For example, the user operates the terminal device again, so that the terminal device adds a virtual wing near the human presented by the target image.

In response to movement of the first object, the terminal device updates a pose of the first object in the target image, and updates a pose of the virtual object in the target image, to obtain a new target image. The pose includes a location and an orientation, and an orientation of the virtual object is associated with an orientation of the first object. For example, after determining that the human moves (translates and/or rotates), the terminal device updates the pose of the human and the pose of the virtual wing in the target image, so that the virtual wing remains near the human, and an orientation of the virtual wing is associated with an orientation of the human.

It can be learned from the foregoing method that when the terminal device responds to the operation of the user, the terminal device may display the target image. The target image presents the moving first object. Therefore, when the terminal device adds a virtual object indicated by the user to the target image, a pose of the first object in the target image and a pose of the virtual object are updated as the first object moves. In this way, the orientation of the virtual object is associated with the orientation of the first object, so that content presented by the new target image is realistic. This improves user experience.

In a possible implementation, in the new target image, the orientation of the virtual object is the same as the orientation of the first object, and a relative location between the virtual object and the first object remains unchanged after the pose of the first object and the pose of the virtual object are updated.

In a possible implementation, the first object is a human, and the virtual object is a virtual wing.

In a possible implementation, the first operation is an operation of starting an application, and the second operation is an operation of adding special effect.

A tenth aspect of embodiments of this application provides an image processing apparatus. The apparatus includes: a display module, configured to: in response to a first operation of a user, display a target image, where a first object is presented in the target image, and the first object is an object in a real environment; a presentation module, configured to: in response to a second operation of the user, present a virtual object in the target image, where the virtual object is overlaid on the first object; and an update module, configured to: in response to movement of the first object, update a pose of the first object in the target image, and update a pose of the virtual object in the target image, to obtain a new target image. The pose includes a location and an orientation, and an orientation of the virtual object is associated with an orientation of the first obj ect.

It can be learned from the foregoing apparatus that when the image processing apparatus responds to the operation of the user, the image processing apparatus may display the target image. The target image presents the moving first object. Therefore, when the image processing apparatus adds a virtual object indicated by the user to the target image, a pose of the first object in the target image and a pose of the virtual object are updated as the first object moves. In this way, the orientation of the virtual object is associated with the orientation of the first object, so that content presented by the new target image is realistic. This improves user experience.

In a possible implementation, in the new target image, the orientation of the virtual object is the same as the orientation of the first object, and a relative location between the virtual object and the first object remains unchanged after the pose of the first object and the pose of the virtual object are updated.

In a possible implementation, the first object is a human, and the virtual object is a virtual wing.

In a possible implementation, the first operation is an operation of starting an application, and the second operation is an operation of adding special effect.

An eleventh aspect of embodiments of this application provides an augmented reality apparatus, including a memory and a processor. The memory stores code, the processor is configured to execute the code. When the code is executed, the augmented reality apparatus performs the method according to any one of the first aspect, the possible implementations of the first aspect, the second aspect, or the possible implementations of the second aspect.

A twelfth aspect of embodiments of this application provides a model training apparatus, including a memory and a processor. The memory stores code, the processor is configured to execute the code. When the code is executed, the model training apparatus performs the method according to the third aspect or the fourth aspect.

A thirteenth aspect of embodiments of this application provides a circuit system. The circuit system includes a processing circuit. The processing circuit is configured to perform the method according to any one of the first aspect, the possible implementations of the first aspect, the second aspect, the possible implementations of the second aspect, the third aspect, or the fourth aspect.

A fourteenth aspect of embodiments of this application provides a chip system. The chip system includes a processor, configured to invoke a computer program or computer instructions stored in a memory, so that the processor is enabled to perform the method according to the first aspect or the possible implementations of the first aspect, the second aspect or the possible implementations of the second aspect, the third aspect, or the fourth aspect.

In a possible implementation, the processor is coupled to the memory by using an interface.

In a possible implementation, the chip system further includes a memory, and the memory stores a computer program or computer instructions.

A fifteenth aspect of embodiments of this application provides a computer storage medium. The computer storage medium stores a computer program. When the program is executed by a computer, the computer is enabled to perform the method according to any one of the first aspect or the possible implementations of the first aspect, the second aspect or the possible implementations of the second aspect, the third aspect, or the fourth aspect.

A sixteenth aspect of embodiments of this application provides a computer program product. The computer program product stores instructions, and when the instructions are executed by a computer, the computer is enabled to perform the method according to the first aspect or the possible implementations of the first aspect, the second aspect or the possible implementations of the second aspect, the third aspect, or the fourth aspect.

In embodiments of this application, when the third object needs to be added to the target image, the second location information of the second object in the camera coordinate system, the third location information of the third object in the camera coordinate system, and the first location information of the first object in the target image in the image coordinate system may be first obtained. The second location information and the third location information are preset information. Because the second object is a reference object of the first object, a pose variation of the first object relative to the second object may be determined based on the second location information and the first location information. The pose variation indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object may be associated with the orientation of the first object (for example, orientations of the third object and the first object are the same or similar). Finally, the third object is rendered in the target image based on the fourth location information. In an obtained new target image, an orientation of the third object may adapt to the orientation of the first object. This can present realistic content, and improve user experience.

**BRIEF DESCRIPTION OF DRAWINGS**

FIG. 1 is a schematic diagram of a structure of a main framework of artificial intelligence;
FIG. 2a is a schematic diagram of a structure of an image processing system according to an embodiment of this application;
FIG. 2b is another schematic diagram of a structure of an image processing system according to an embodiment of this application;
FIG. 2c is a schematic diagram of an image processing related device according to an embodiment of this application;
FIG. 3a is a schematic diagram of an architecture of a system 100 according to an embodiment of this application;
FIG. 3b is a schematic diagram of dense human pose estimation;
FIG. 4 is a schematic flowchart of an augmented reality method according to an embodiment of this application;
FIG. 5 is a schematic diagram of a target image according to an embodiment of this application;
FIG. 6 is a schematic diagram of a standard human model and a wing according to an embodiment of this application;
FIG. 7 is a schematic diagram of a pose variation according to an embodiment of this application;
FIG. 8 is a schematic diagram of a process of determining an occlusion relationship according to an embodiment of this application;
FIG. 9 is another schematic flowchart of an augmented reality method according to an embodiment of this application;
FIG. 10 is a schematic diagram of controlling a standard human model according to an embodiment of this application;
FIG. 11 is a schematic diagram of an application example of an augmented reality method according to an embodiment of this application;
FIG. 12 is a schematic flowchart of a model training method according to an embodiment of this application;
FIG. 13 is a schematic diagram of a structure of an augmented reality apparatus according to an embodiment of this application;
FIG. 14 is another schematic diagram of a structure of an augmented reality apparatus according to an embodiment of this application;
FIG. 15 is a schematic diagram of a structure of a model training apparatus according to an embodiment of this application;
FIG. 16 is a schematic diagram of a structure of an execution device according to an embodiment of this application;
FIG. 17 is a schematic diagram of a structure of a training device according to an embodiment of this application; and
FIG. 18 is a schematic diagram of a structure of a chip according to an embodiment of this application.

**DESCRIPTION OF EMBODIMENTS**

The following describes in detail technical solutions in embodiments of this application with reference to the accompanying drawings in embodiments of this application.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is only a discrimination manner for describing objects having a same attribute in embodiments of this application. In addition, the terms "include", "contain" and any other variants mean to cover a non-exclusive inclusion, so that a process, method, system, product, or device that includes a series of units is not necessarily limited to those units, but may include other units not expressly described or inherent to such a process, method, system, product, or device.

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Therefore, in embodiments of this application, AR technologies may be implemented by using AI technologies, to provide a user with more vivid and interesting video content or image content.

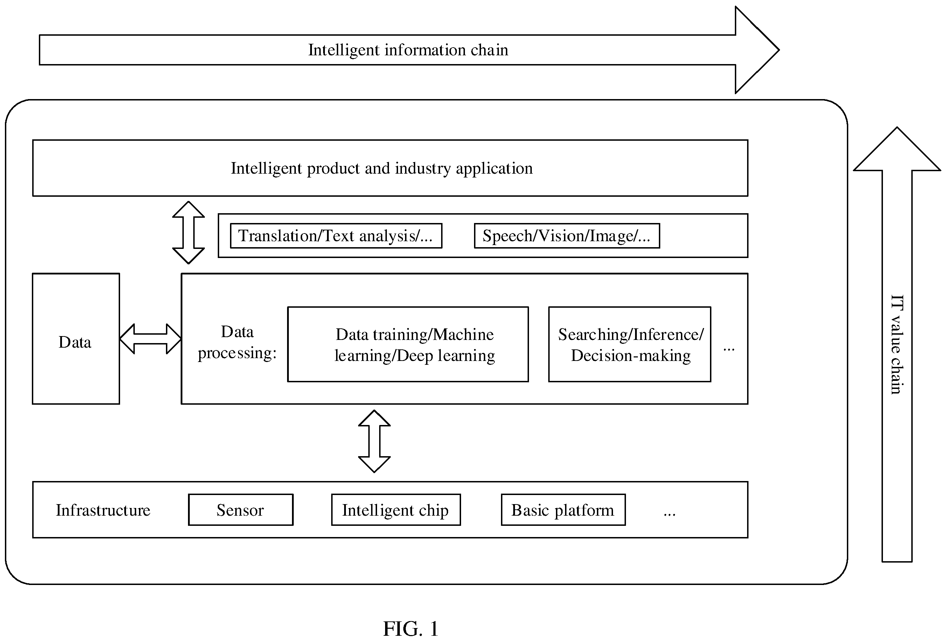

An overall working procedure of an artificial intelligence system is first described. FIG. 1 is a schematic diagram of a structure of a main framework of artificial intelligence. The following describes the main framework of artificial intelligence from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to an information technology industry from an underlying infrastructure and information (providing and processing a technology implementation) of artificial intelligence to an industrial ecological process of a system.

(1) Infrastructure

The infrastructure provides computing capability support for an artificial intelligence system, implements communication with an external world, and implements support by using a basic platform. The infrastructure communicates with the outside by using a sensor. The computing capability is provided by an intelligent chip (a hardware acceleration chip such as a CPU, an NPU, a GPU, an ASIC, and an FPGA). The basic platform includes platform assurance and support related to a distributed computing framework and network, and the like. The basic platforms may include a cloud storage and computing network, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a voice, and text, further relates to internet of things data of a conventional device, and includes service data of an existing system and sensing data such as a force, displacement, a liquid level, a temperature, and humidity.

(3) Data processing

Data processing usually includes a manner such as data training, machine learning, deep learning, searching, inference, or decision-making.
Machine learning and deep learning may perform intelligent information modeling, extraction, preprocessing, and training of data through symbolization and formalization.
Inference means a process of simulating a human inference manner for machine thinking and problem-resolving by using formalized information based on an inference control policy in a computer system or an intelligent system. Atypical function is searching and matching.
Decision-making is a process of making a decision based on intelligent information after inference, and usually provides a function such as classification, sorting, and prediction.

(4) General capability

After data processing mentioned above is performed on data, some general capabilities may further be formed based on a data processing result, for example, an algorithm or a general system such as translation, text analysis, computer vision processing, speech recognition, and image recognition.

(5) Intelligent product and industry application

Intelligent product and industry applications means products and applications of the artificial intelligence system in various fields, and encapsulate an overall solution of artificial intelligence, to productize intelligent information decision-making and implement applications. Application fields mainly include intelligent terminals, intelligent transportation, intelligent healthcare, autonomous driving, smart cities, and the like.
The following describes several application scenarios of this application.

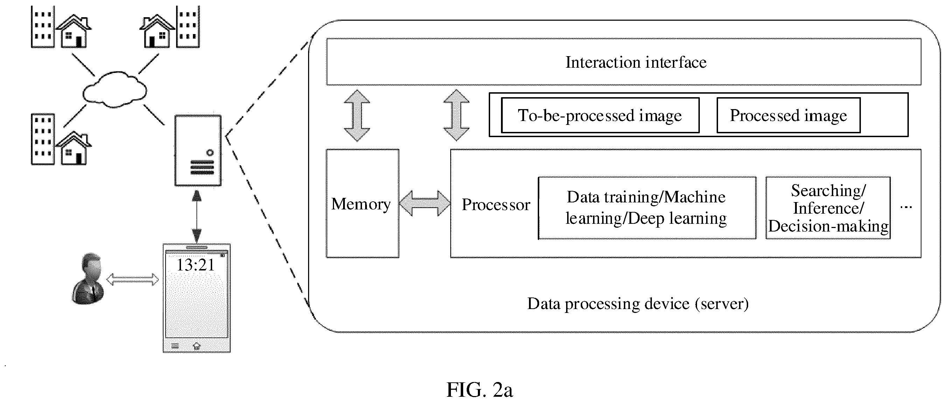

FIG. 2a is a schematic diagram of a structure of an image processing system according to an embodiment of this application. The image processing system includes user equipment and a data processing device. The user equipment includes an intelligent terminal such as a mobile phone, a personal computer, or an information processing center. The user equipment is an initiator of image processing. A user usually initiates a request by using the user equipment, namely, the initiator of the image processing request.

The data processing device may be a device or server with a data processing function, such as a cloud server, a network server, an application server, or a management server. The data processing device receives an image enhancement request from the intelligent terminal through an interaction interface, and then performs image processing in a manner such as machine learning, deep learning, searching, inference, and decision-making by using a memory that stores data and a processor that processes data. The memory in the data processing device may be a general name, and includes a local storage and a database storing historical data. The database may be in the data processing device, or may be in another network server.

In the image processing system shown in FIG. 2a, the user equipment may receive an instruction of the user. For example, the user equipment may obtain one image input/selected by the user, and then initiate a request to the data processing device. Then, the data processing device executes an image semantic segmentation application on the image obtained by the user equipment, to obtain a corresponding processing result for the image. For example, the user equipment may obtain one to-be-processed image input by the user, and then initiate an image processing request to the data processing device. Then, the data processing device executes an image processing application (for example, image target detection, and obtaining an object pose variation in the image) on the image, to obtain a processed image.

In FIG. 2a, the data processing device may perform a data processing method in embodiments of this application.

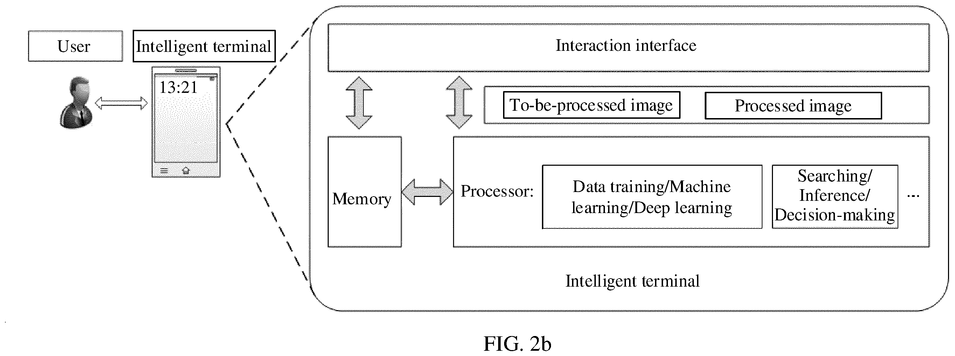

FIG. 2b is another schematic diagram of a structure of an image processing system according to an embodiment of this application. In FIG. 2b, user equipment directly acts as a data processing device. The user equipment can directly obtain input from a user and directly process the input through hardware of the user equipment. A specific process is similar to that in FIG. 2a. For details, refer to the foregoing descriptions. Details are not described herein again.

In the image processing system shown in FIG. 2b, the user equipment may receive an instruction of the user. For example, the user equipment may obtain one to-be-processed image that is selected by the user from the user equipment. Then, the user equipment executes an image processing application (for example, image target detection and obtaining an object pose variation in the image) on the image, to obtain a corresponding processing result for the image.

In FIG. 2b, the user equipment may perform a data processing method in embodiments of this application.

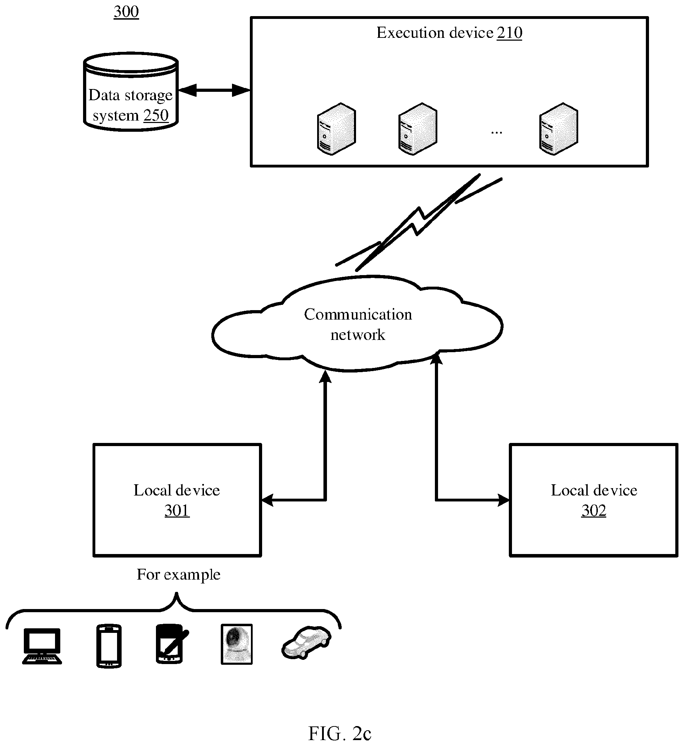

FIG. 2c is a schematic diagram of an image processing related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a support vector machine model), and execute an image processing application on the image by using a final model obtained through data training or learning, to obtain a corresponding processing result.

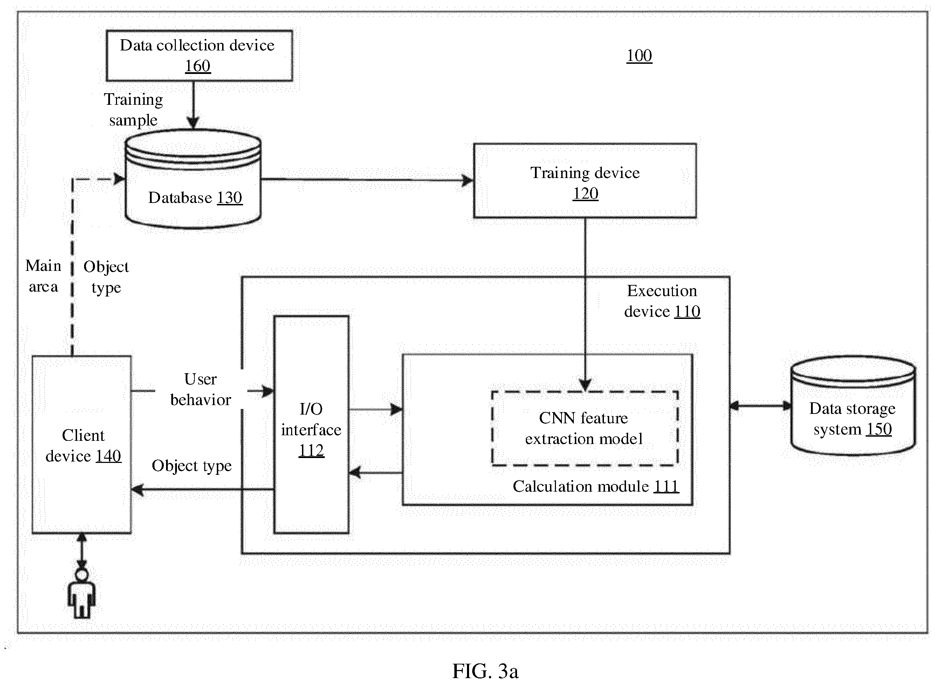

FIG. 3a is a schematic diagram of an architecture of a system 100 according to an embodiment of this application. In FIG. 3a, an execution device 110 configures an input/output (input/output, I/O) interface 112, configured to exchange data with an external device. A user may input data to the I/O interface 112 by using a client device 140. The input data in this embodiment of this application may include each to-be-scheduled task, a callable resource, and another parameter.

In a process in which the execution device 110 preprocesses the input data, or a computing module 111 of the execution device 110 performs related processing such as computing (for example, implementing a function of a neural network in this application), the execution device 110 may invoke data, code, and the like in a data storage system 150 for corresponding processing, and may further store, in the data storage system 150, data, instructions, and the like that are obtained through corresponding processing.

Finally, the I/O interface 112 returns a processing result to the client device 140, so as to provide the processing result to the user.

It should be noted that a training device 120 may generate corresponding target models/rules for different targets or different tasks based on different training data. The corresponding target models/rules may be used to implement the targets or complete the tasks, to provide a required result for the user. The training data may be stored in a database 130, and is from a training sample collected by a data collection device 160.

In a case shown in FIG. 3a, the user may manually provide input data and the user may manually provide the input data in an interface provided by the I/O interface 112. In another case, the client device 140 may automatically send input data to the I/O interface 112. If the client device 140 needs to obtain authorization from the user to automatically send the input data, the user may set corresponding permission in the client device 140. The user may view, on the client device 140, a result output by the execution device 110. Specifically, the result may be presented in a manner such as display, sound, action, or the like. The client device 140 may also act as a data collector, to collect, as new sample data, input data that is input to the I/O interface 112 and an output result that is output from the I/O interface 112 that are shown in the figure, and store the new sample data in the database 130. Certainly, the client device 140 may alternatively not perform collection. Instead, the I/O interface 112 directly stores, in the database 130 as new sample data, input data that is input to the I/O interface 112 and an output result that is output from the I/O interface 112 that are shown in the figure.

It should be noted that FIG. 3a is only a schematic diagram of a system architecture according to an embodiment of this application. A location relationship between a device, a component, a module, and the like shown in the figure constitutes no limitation. For example, in FIG. 3a, the data storage system 150 is an external memory relative to the execution device 110. In another case, the data storage system 150 may alternatively be disposed in the execution device 110. As shown in FIG. 3a, the neural network may be obtained through training based on the training device 120.

An embodiment of this application further provides a chip. The chip includes a neural network processing unit NPU. The chip may be disposed in the execution device 110 shown in FIG. 3a, to complete computing of the computing module 111. The chip may alternatively be disposed in the training device 120 shown in FIG. 3a, to complete training of the training device 120 and output a target model/rule.

The neural network processing unit NPU acts as a coprocessor, and is disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit internally includes a plurality of processing units (process engines, PEs). In some implementations, the operation circuit is a two-dimensional systolic array. The operation circuit may alternatively be a one-dimensional systolic array or another electronic circuit capable of performing a mathematical operation such as multiplication and addition. In some implementations, the operation circuit is a general-purpose matrix processor.

For example, it is assumed that there is an input matrix A, a weight matrix B, and an output matrix C. The operation circuit fetches, from the weight memory, data corresponding to the matrix B and buffers the data on each PE in the operation circuit. The operation circuit fetches data of the matrix A from the input memory, to perform a matrix operation on the matrix B, and stores an obtained partial result or an obtained final result of the matrix in an accumulator (accumulator).

A vector computation unit may perform further processing on an output of the operation circuit, for example, vector multiplication, vector addition, an exponential operation, a logarithmic operation, and size comparison. For example, the vector computation unit may be configured to perform network computing such as pooling (pooling), batch normalization (batch normalization), or local response normalization (local response normalization) at a non-convolutional/non-FC layer in the neural network.

In some implementations, the vector computation unit can store a processed output vector into a unified buffer. For example, the vector computation unit may apply a non-linear function to the output of the operation circuit, for example, a vector of an accumulated value, to generate an activation value. In some implementations, the vector computation unit generates a normalized value, a combined value, or both a normalized value and a combined value. In some implementations, the processed output vector can be used as an activation input to the operation circuit, for example, used in a subsequent layer in the neural network.

The unified memory is configured to store input data and output data.

For weight data, a storage unit access controller (direct memory access controller, DMAC) directly moves input data in an external memory to the input memory and/or the unified memory, stores weight data in the external memory into the weight memory, and stores data in the unified memory into the external memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to call the instruction buffered in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses $x_s$ and an intercept of 1 as an input. An output of the operation unit may be as follows:

$$h_{W,b}\left(x\right) = f\left(W^T x\right) = f\left(\sum\nolimits_{s=1}^{n} W_s x_s + b\right) \qquad (1)$$

s = 1, 2, ..., or n. n is a natural number greater than 1. $W_s$ is a weight of $x_s$. b is a bias of a neuron. f is an activation function (activation function) of the neuron, used to introduce a non-linear feature into a neural network, to convert an input signal in the neuron into an output signal. The output signal of the activation function may be used as an input of a next convolutional layer. The activation function may be a sigmoid function. The neural network is a network formed by connecting a plurality of single neurons together. In other words, an output of one neuron may be an input of another neuron. An input of each neuron may be connected to a local receptive field of a previous layer, to extract a feature of the local receptive field. The local receptive field may be a region including several neurons.

Work at each layer of the neural network may be described by using a mathematical expression $y = a(Wx+b)$. Work at each physical layer of the neural network may be understood as completing transformation from input space to output space (that is, from row space to column space of a matrix) by performing five operations on the input space (a set of input vectors). The five operations include: 1. dimension increase/dimension reduction; 2. zooming in/out; 3. rotation; 4. translation; and 5. "bending". The operations 1, 2, and 3 are completed by $Wx$, the operation 4 is completed by $+b$, and the operation 5 is implemented by $a()$. The word "space" is used herein for expression because a classified object is not a single thing, but a type of things. Space is a collection of all individuals of such type of things. $W$ is a weight vector, and each value in the vector indicates a weight value of one neuron in the neural network at the layer. The vector $W$ determines space transformation from the input space to the output space described above, in other words, a weight $W$ of each layer controls a method for space transformation. An objective of training the neural network is to finally obtain a weight matrix (a weight matrix formed by vectors $W$ at a plurality of layers) at all layers of a trained neural network. Therefore, a training process of the neural network is essentially a manner of learning control of space transformation, and more specifically, learning a weight matrix.

Because it is expected that an output of the neural network is as close as possible to a value that is actually expected to be predicted, a current predicted value of the network may be compared with an actually expected target value, and then a weight vector at each layer of the neural network is updated based on a difference between the current predicted value and the target value (certainly, there is usually an initialization process before a first update, that is, a parameter is preconfigured for each layer of the neural network). For example, if the predicted value of the network is large, the weight vector is continuously adjusted to lower the predicted value until the neural network can predict the actually expected target value. Therefore, "how to obtain the difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct a value of a parameter of an initial neural network model by using an error back propagation (back propagation, BP) algorithm, so that a reconstruction error loss of the neural network model becomes increasingly smaller. Specifically, an input signal is forward propagated until the error loss occurs in an output, and the parameter of the initial neural network model is updated through back propagation of error loss information, to converge the error loss. The back propagation algorithm is an error-loss-centered back propagation motion intended to obtain a parameter, such as a weight matrix, of an optimal neural network model.

(3) Dense human pose estimation (dense human pose estimation)

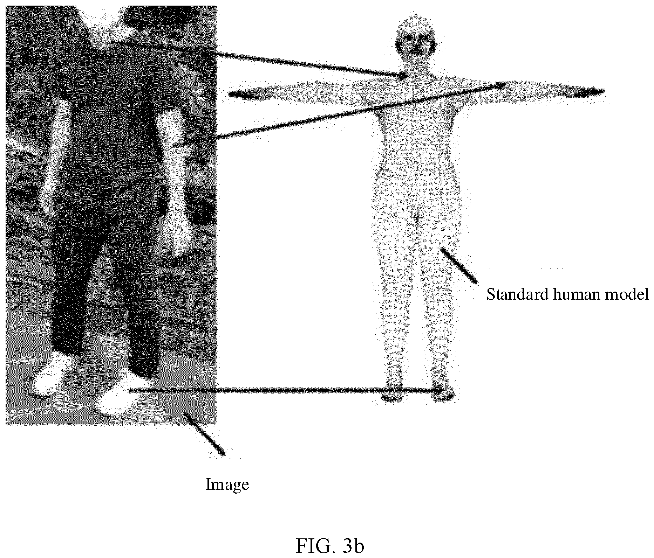

A dense correspondence between a pixel of an image and a surface point of a three-dimensional standard human model may be established by using a dense human pose estimation algorithm. As shown in FIG. 3b (FIG. 3b is a schematic diagram of dense human pose estimation), the algorithm may establish a correspondence between each pixel of a real human in a two-dimensional image and a surface point in a three-dimensional standard human model.

The following describes methods provided in this application from a neural network training side and a neural network application side.

A model training method provided in an embodiment of this application relates to image processing, and may be specifically applied to a data processing method such as data training, machine learning, and deep learning. Intelligent information modeling, extraction, preprocessing, and training are performed on training data (for example, a to-be-trained image in this application) through symbolization and formalization, to obtain a trained neural network (for example, a first neural network and a second neural network in this application). In addition, according to an augmented reality method provided in an embodiment of this application, input data (for example, a target image in this application) may be input into the trained neural network by using the trained neural network, to obtain output data (for example, an image of a first object, a pose variation of the first object relative to a second object, and the like in this application). It should be noted that the model training method and the augmented reality method that are provided in embodiments of this application are inventions generated based on a same idea, or may be understood as two parts in one system or two phases, such as a model training phase and a model application phase, of one overall procedure.

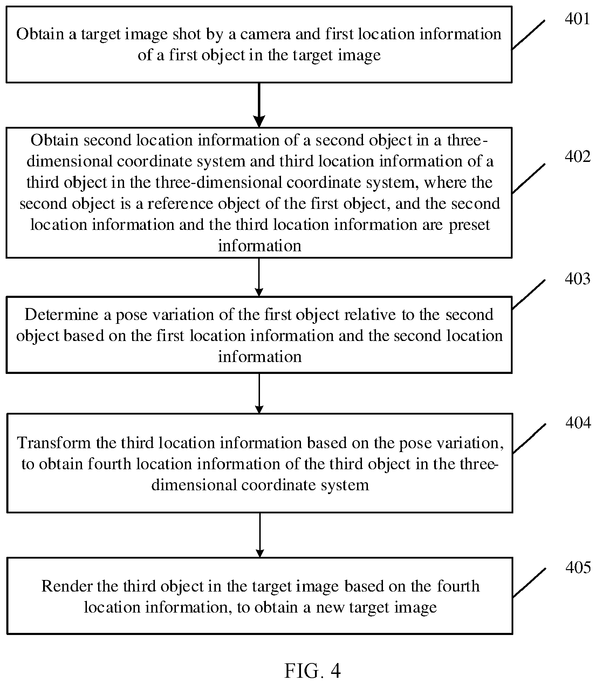

FIG. 4 is a schematic flowchart of an augmented reality method according to an embodiment of this application. As shown in FIG. 4, the method includes the following steps.

401: Obtain a target image shot by a camera and first location information of a first object in the target image.

402: Obtain second location information of a second object in a three-dimensional coordinate system and third location information of a third object in the three-dimensional coordinate system. The second object is a reference object of the first object. The second location information and the third location information are preset information.

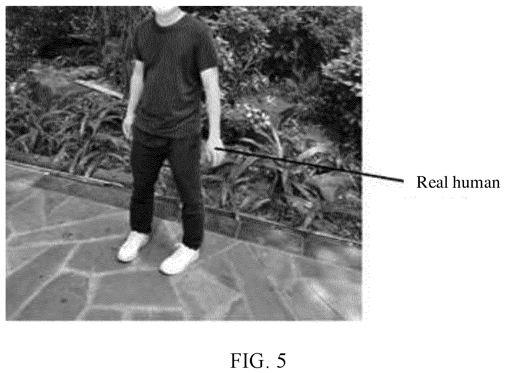

When a user needs to add a virtual object (or additionally add a real object) to the target image that presents a real environment, the user may first obtain the target image shot by the camera. The real environment presented by the target image includes a plurality of real objects (in other words, the target image includes images of the plurality of real objects), for example, a real human, a tree, and a house shown in FIG. 5 (FIG. 5 is a schematic diagram of the target image according to an embodiment of this application). In the plurality of real objects, a real object that the user focuses on may be considered as the first object. Further, a real object of a virtual object to be added by the user may be further considered as the third object, and a reference object of the real object that the user focuses on is considered as the second object. For example, if the user wants to add one wing to the real human in the target image, the user may use a three-dimensional standard human model as a reference object of the real human.

Specifically, the second object is usually a standard object model corresponding to the first object. The second object may be obtained according to a principal component analysis (principal component analysis, PCA) algorithm, or may be obtained through manual setting, or the like. The second location information of the second object, namely, the reference object of the first object, is preset in a camera coordinate system, in other words, three-dimensional coordinates of each surface point (all surface points of the entire object) of the second object are preset in the camera coordinate system. In this way, one pose is preset for the second object, in other words, the second object is preset at a specific location in the camera coordinate system, and is preset with one orientation (posture).

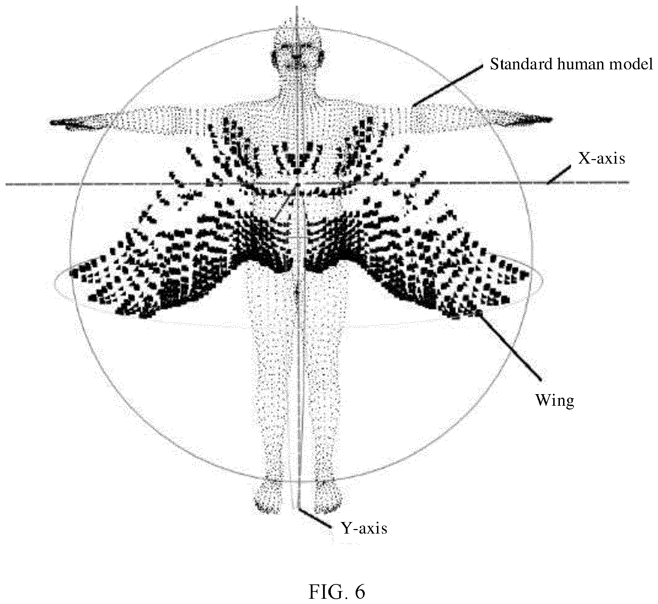

Similarly, the third location information of the third object is also preset in the camera coordinate system (namely, a three-dimensional coordinate system corresponding to the camera that shoots the target object). To be specific, three-dimensional coordinates of each surface point (all surface points of the entire object) of the third object in the camera coordinate system are preset. It can be learned that one pose is also preset for the third object. It should be noted that the second location information of the second object may be associated with the third location information of the third object. To be specific, in the camera coordinate system, the location set for the second object is associated with the location set for the third object, and an orientation set for the second object is also associated with an orientation set for the third object (for example, orientations of the second object and the third object are the same or similar). Still as in the foregoing example, as shown in FIG. 6 (FIG. 6 is a schematic diagram of a standard human model and a wing according to an embodiment of this application), the standard human model is disposed at an origin of the camera coordinate system, and the wing is disposed on a back of the standard human. An orientation of the standard human model (in FIG. 6, the orientation of the standard human model points to a positive half axis of a z-axis) is the same as an orientation of the wing. The orientation of the standard human model is a direction pointed to by a front face of the standard human model. The orientation of the wing is a direction pointed to by a connection end of the wing.

Because the first object also occupies a specific location in the target image, the first location information of the first object in an image coordinate system (namely, a two-dimensional coordinate system corresponding to the target image) may be obtained. To be specific, two-dimensional coordinates of each surface point (which may also be referred to as a pixel) of the first object in the image coordinate system may be obtained. It should be noted that, in this embodiment, each surface point of the first object means each surface point of the first object shot by the camera (namely, each surface point of the first object presented by the target image). For example, if the camera shoots a front face of the first object, each surface point of the first object herein means each surface point of the front face of the first object. If the camera shoots a back face of the first object, each surface point of the first object herein means each surface point of the back face of the first object. If the camera shoots a side face of the first object, each surface point of the first object herein means each surface point of the side face of the first object; and the like.

It can be learned that, after the target image to be processed is obtained, the second location information of the second object and the third location information of the third object may be directly obtained, and the first location information of the first object is obtained from the target image.

It should be understood that the camera coordinate system is a three-dimensional coordinate system constructed by using the camera that shoots the target image as the origin. The image coordinate system is a two-dimensional coordinate system constructed by using an upper left corner of the target image as an origin.

It should be further understood that in this embodiment, an orientation of the first object is a direction pointed to by the front face of the first object, the orientation of the first object is usually different from an orientation preset for the second object, and a location of the first object is usually different from a location preset for the second object.

403: Determine a pose variation of the first object relative to the second object based on the first location information and the second location information.

After the second location information of the second object, the third location information of the third object, and the first location information of the first object are obtained, a pose variation of the first object relative to the second object may be determined based on the second location information and the first location information. The pose variation of the first object relative to the second object (which may also be referred to as a transformation matrix) indicates a location change from the second object to the first object (including a distance change on an x-axis, a distance change on a y-axis, and a distance change on the z-axis), and an orientation change from the second object to the first object (including a change of a rotation angle on the x-axis, a change of a rotation angle on the y-axis, and a change of a rotation angle on the z-axis). Specifically, the pose variation of the first object relative to the second object may be determined in a plurality of manners. The following separately describes the manners.

In a possible implementation, the determining a pose variation of the first object relative to the second object based on the second location information and the first location information includes: (1) obtaining depth information of the first object. Specifically, the depth information of the first object includes a depth value of each surface point in the first object, and the depth value of each surface point indicates a distance from the surface point to the camera. (2) determining fifth location information of the first object in the camera coordinate system based on the first location information of the first object in the image coordinate system and the depth information of the first object. Specifically, three-dimensional coordinates of each surface point of the first object in the camera coordinate system are calculated based on the two-dimensional coordinates of each surface point of the first object and the depth value of each surface point. In this way, a pose of the first object in the camera coordinate system is determined. (3) calculating a variation between the second location information of the second object and the fifth location information of the first object, to obtain the pose variation of the first object relative to the second object. Specifically, a correspondence between a plurality of surface points of the first object and a plurality of surface points of the second object (that is, a corresponding point of each surface point of the first object on the second object) may be determined by using a dense human pose estimation algorithm. Therefore, a distance between the three-dimensional coordinates of each surface point of the first object and three-dimensional coordinates of the corresponding surface point of the second object may be calculated based on the correspondence, to obtain the pose variation of the first object relative to the second object.

In another possible implementation, the determining a pose variation of the first object relative to the second object based on the second location information and the first location information includes: (1) transforming the second location information of the second object in the camera coordinate system, to obtain fifth location information of the first object in the camera coordinate system. Specifically, the corresponding point of each surface point of the first object on the second object may be determined by using the dense human pose estimation algorithm. Because three-dimensional coordinates of the corresponding point on the second object are preset, the three-dimensional coordinates of the point on the second object may be randomly transformed (that is, the point is randomly rotated and translated). The three-dimensional coordinates of the rotated and translated point may be considered as the three-dimensional coordinates of each surface point of the first object in the camera coordinate system. (2) projecting the fifth location information of the first object in the camera coordinate system to the image coordinate system, to obtain sixth location information of the first object in the image coordinate system. Specifically, the three-dimensional coordinates of the rotated and translated points may be projected to the target image, to obtain new two-dimensional coordinates of each surface point of the first object in the target image. (3) if a variation between the sixth location information and the first location information meets a preset condition, determining the transformation matrix for performing a transformation operation on the second location information as the pose variation of the first object relative to the second object. Specifically, if a distance between original two-dimensional coordinates and the new two-dimensional coordinates of each surface point of the first object in the target image meets the preset condition, the transformation operation (that is, one transformation matrix) in step (1) is determined as the pose variation of the first object relative to the second object. If the preset condition is not met, step (1) to step (3) are performed again until the preset condition is met.

Further, the preset condition may be less than or equal to a preset distance threshold, or may be a minimum value in a plurality of rounds of calculation, or the like. For example, step (1) and step (2) may be repeatedly performed to obtain ten to-be-determined distances. A minimum distance value is selected from the ten to-be-determined distances as a distance that meets the preset condition, and a transformation operation corresponding to the distance is determined as the pose variation of the first object relative to the second object.

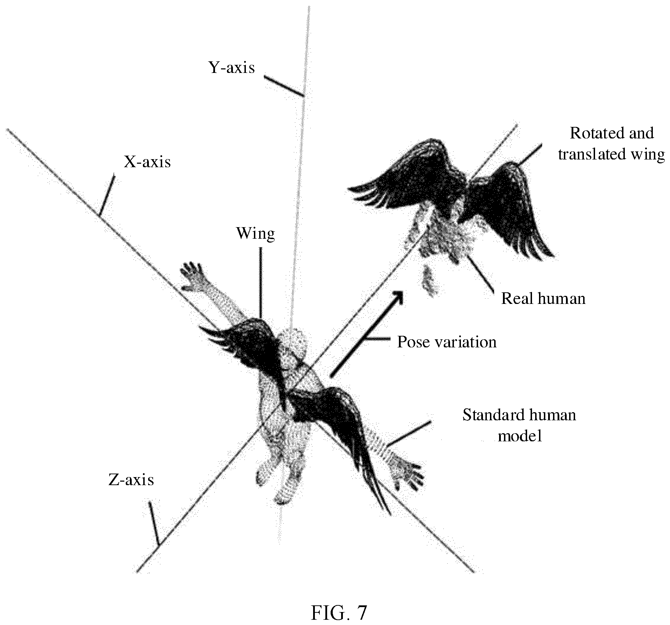

To further understand the process of determining the pose variation, the following further describes the process with reference to FIG. 7. FIG. 7 is a schematic diagram of a pose variation according to an embodiment of this application. It should be noted that FIG. 7 is constructed based on FIG. 5, in other words, a real human in FIG. 7 is the real human in FIG. 5. As shown in FIG. 7, the standard human model is disposed at the origin of the camera coordinate system, the wing is disposed on a back of the standard human model, and an orientation set for the standard human model is the same as an orientation set for the wing. In the target image shown in FIG. 5, after it is determined that the wing needs to be added behind the real human, location information of the real human in the target image, that is, two-dimensional coordinates of each surface point in the real human in the target image may be obtained, and location information of the standard human model in the camera coordinate system, that is, three-dimensional coordinates set for each surface point in the standard human model may be obtained.

Then, location information of the real human in the target image in the camera coordinate system needs to be determined. For example, three-dimensional coordinates of each surface point of the real human in the camera coordinate system may be determined based on the two-dimensional coordinates of each surface point of the real human in the target image and a depth value of each surface point of the real human. For another example, a corresponding point of each surface point of the real human in the standard human model is determined, and the point is rotated and translated until three-dimensional coordinates of the point meet a requirement (for example, two-dimensional coordinates obtained by projecting the three-dimensional coordinates of the point to the target image has a smallest distance to the two-dimensional coordinates of each surface point of the real human in the target image). Then, the three-dimensional coordinates of the points may be finally determined as three-dimensional coordinates of each surface point of the real human in the camera coordinate system. In this case, a location and an orientation of the real human in the camera coordinate system can be determined.

Finally, a pose variation of the real human relative to the standard human model may be determined based on the location information of the standard human model in the camera coordinate system and the location information of the real human in the camera coordinate system. Specifically, after the three-dimensional coordinates of each surface point of the real human in the camera coordinate system are obtained, for any surface point of the real human, a distance between three-dimensional coordinates of the surface point and three-dimensional coordinates of a corresponding point of the point in the standard human model (namely, three-dimensional coordinates set for the corresponding point) may be calculated. After calculation is performed on each surface point of the real human, the pose variation of the real human relative to the standard human model may be obtained. As shown in FIG. 7, the orientation of the real human does not point to the positive half axis of the z-axis (that is, the orientation of the real human slightly deviates from the positive half axis of the z-axis, but does not directly points to the positive half axis of the z-axis), but the orientation of the standard human model points to the positive half axis of the z-axis. In other words, there is a difference between the orientation of the real human and the orientation of the standard human model, and there is also a difference between the location of the real human and the location of the standard human model. The pose variation of the real human relative to the standard human model may indicate both an orientation change and a location change between the real human and the standard human model.

404: Transform the third location information based on the pose variation, to obtain fourth location information of the third object in the three-dimensional coordinate system.

After the pose variation of the first object relative to the second object is obtained, because the pose variation may indicate both the orientation change and the location change between the first object and the second object, a same orientation change and a same location change may occur on the third object. To be specific, the third location information is transformed based on the pose variation, to obtain the fourth location information of the third object in the camera coordinate system and determine a final location and a final orientation of the third object are d. Specifically, for any surface point of the third object, three-dimensional coordinates of the surface point may be transformed (for example, matrix multiplication calculation is performed) based on the pose variation of the first object relative to the second object, to obtain new three-dimensional coordinates of the surface point. After all surface points of the third object are transformed, the third object is translated from an originally set location to the final location, and the third object is rotated from an originally set orientation to the final orientation.

As shown in FIG. 7, after the pose variation of the real human relative to the standard human model is obtained, the pose variation indicates an orientation change from the standard human model to the real human, and a location change from the standard human model to the real human. Therefore, a same orientation change and a same location change may occur on the wing. To be specific, the wing is rotated and translated based on the pose variation, so that the rotated and translated wing is associated with the real human, that is, the wing is located at the back of the real human, and orientations of the wing and the real human are the same.

405: Render the third object in the target image based on the fourth location information, to obtain a new target image.

After the fourth location information of the third object is obtained, pinhole imaging may be performed based on the fourth location information, to obtain an image of the third object. Then, an occlusion relationship between the third object and the first object is obtained. The image of the third object and the image of the first object are fused in the target image based on the occlusion relationship, to obtain the new target image. Specifically, the occlusion relationship between the third object and the first object may be obtained in a plurality of manners, which are separately described below.

In a possible implementation, the obtaining the occlusion relationship between the third object and the first object includes: (1) calculating a first distance between the first object and an origin of the three-dimensional coordinate system based on the fifth location information. Specifically, a distance from each surface point of the first object to the origin may be calculated based on the three-dimensional coordinates of each surface point of the first object in the camera coordinate system, and an average value of the distance from the surface point to the origin is used as the first distance from the first object to the origin. (2) calculating a second distance between the third object and the origin of the three-dimensional coordinate system based on the fourth location information. Specifically, a distance from each surface point of the third object to the origin may be calculated based on the new three-dimensional coordinates of each surface point of the third object in the camera coordinate system, and an average value of the distance from the surface point to the origin is used as the second distance from the third object to the origin. (3) comparing the first distance with the second distance, to obtain the occlusion relationship between the third object and the first object. Specifically, if the first distance is less than or equal to the second distance, the third object is occluded by the first object; or if the first distance is greater than the second distance, the first object is occluded by the third object.

In another possible implementation, the obtaining the occlusion relationship between the third object and the first object includes: (1) obtaining a correspondence between a plurality of surface points of the first object and a plurality of surface points of the second object. (2) obtaining distribution of the plurality of surface points of the first object on the second object based on the correspondence, for example, a quantity of surface points of the first object on a front face of the second object, and a quantity of surface points of the first object on a back face of the second object. (3) obtaining the occlusion relationship between the third object and the first object based on the distribution. Specifically, in the surface points of the first object, if a quantity of surface points on the front face of the second object is greater than or equal to a quantity of surface points on the back face of the second object, the third object is occluded by the first object; or if a quantity of surface points on the front face of the second object is less than a quantity of surface points on the back face of the second object, the first object is occluded by the third object.

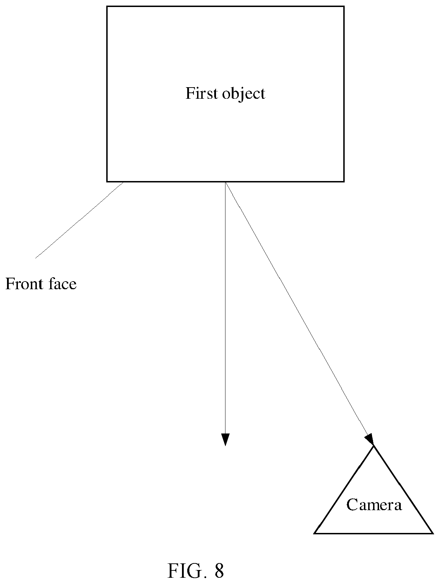

In another possible implementation, the obtaining the occlusion relationship between the third object and the first object includes: (1) determining the front face of the first object based on the orientation change of the first object relative to the second object. Specifically, because the orientation set for the second object is known, the front face of the second object may also be known. In this case, the orientation of the first object may be determined based on the orientation change of the first object relative to the second object and an orientation of the second object. In other words, the front face of the first object is determined. (2) As shown in FIG. 8 (FIG. 8 is a schematic diagram of a process of determining an occlusion relationship according to an embodiment of this application), the occlusion relationship between the third object and the first object is obtained based on an included angle between the orientation of the first object (a direction pointed to by the front face of the first object) and an orientation from a central point of the front face of the first object to the origin (origin) of the camera coordinate system. For example, if the included angle is less than or equal to 90°, the third object is occluded by the first object; or if the included angle is greater than 90°, the first object is occluded by the third object.

After the occlusion relationship between the third object and the first object is obtained, salient object detection may be performed on the target image by using a first neural network, to obtain the image of the first object and an image of another object other than the first object. If the third object is occluded by the first object, when the image of the first object, the image of the third object, and the image of the another object are fused, the image of the first object may cover the image of the third object, to obtain the new target image. If the first object is occluded by the third object, when the image of the first object, the image of the third object, and the image of the another object are fused, the image of the third object may cover the image of the first object, to obtain the new target image. For example, in the new target image, because the real human occludes the wing (that is, the camera shoots most of a front face of the real human), an image of the wing at a connection between the wing and the real human is covered by an image of the real human. In this way, content presented by the new target image is realistic. This improves user experience.

In this embodiment of this application, when the third object needs to be added to the target image, the second location information of the second object in the camera coordinate system, the third location information of the third object in the camera coordinate system, and the first location information of the first object in the target image in the image coordinate system may be first obtained. The second location information and the third location information are preset information. Because the second object is a reference object of the first object, a pose variation of the first object relative to the second object may be determined based on the second location information and the first location information. The pose variation indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object may be associated with the orientation of the first object (for example, orientations of the third object and the first object are the same or similar). Finally, the third object is rendered in the target image based on the fourth location information. In an obtained new target image, an orientation of the third object may adapt to the orientation of the first object. This can present realistic content, and improve user experience.

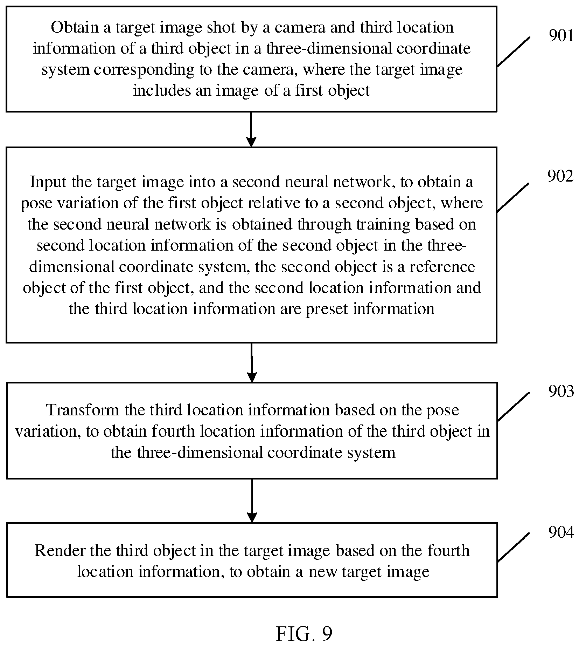

FIG. 9 is another schematic flowchart of an augmented reality method according to an embodiment of this application. As shown in FIG. 9, the method includes the following steps.

901: Obtain a target image shot by a camera and third location information of a third object in a three-dimensional coordinate system corresponding to the camera. The target image includes an image of a first object.

902: Input the target image into a second neural network, to obtain a pose variation of the first object relative to a second object. The second neural network is obtained through training based on second location information of the second object in the three-dimensional coordinate system. The second object is a reference object of the first object. The second location information and the third location information are preset information.

For descriptions of the target image, the first object, the second object, the third object, the second location information of the second object, and the third location information of the third object, refer to the related descriptions in step 401 and step 402 in the embodiment shown in FIG. 4. Details are not described herein again.

During obtaining the target image, the target image may be input into the second neural network, to obtain a control parameter of the second object, including a shape parameter and a posture parameter. The shape parameter is used to control a shape of the second object (the second object is high, short, fat, thin, or the like), and the posture parameter is used to control a posture (an orientation, an action, and the like) of the second object.

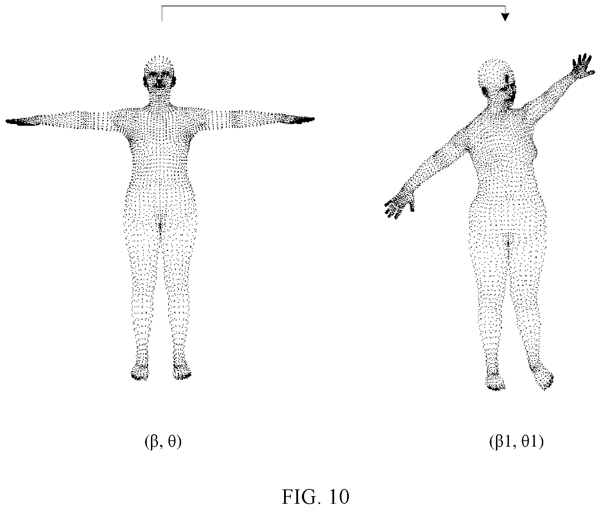

The shape parameter and the posture parameter are adjusted, so that a form of the second object may be adjusted to be consistent with or close to a form of the first object in the target image. For ease of understanding, the following further describes the control parameter with reference to FIG. 10. FIG. 10 is a schematic diagram of controlling a standard human model according to an embodiment of this application. A size and a posture of the standard human model may be adjusted by changing an original shape parameter $\beta$ and an original posture parameter $\theta$ of the standard human model, so that a form of the adjusted model (a shape parameter of the adjusted model is $\beta 1$, and a posture parameter of the adjusted model is $\theta 1$) is the same as or similar to a form of the real human in the target image.

After a control parameter of the second object is obtained, the control parameter may be calculated, to obtain the pose variation of the first object relative to the second object.

903: Transform the third location information based on the pose variation, to obtain fourth location information of the third object in the three-dimensional coordinate system.

904: Render the third obj ect in the target image based on the fourth location information, to obtain a new target image.

After the fourth location information of the third object is obtained, pinhole imaging may be performed based on the fourth location information, to obtain an image of the third object. Then, the second location information of the second object may be obtained, and the second location information is transformed based on the pose variation of the first object relative to the second object, to obtain fifth location information of the first object in the camera coordinate system. Then, an occlusion relationship between the third object and the first object is obtained. Finally, the image of the third object and the image of the first object are fused in the target image based on the occlusion relationship, to obtain the new target image.

The occlusion relationship between the third object and the first object may be obtained in a plurality of manners.

In a possible implementation, the obtaining the occlusion relationship between the third object and the first object includes: calculating a first distance between the first object and an origin of the three-dimensional coordinate system based on the fifth location information; calculating a second distance between the third object and the origin of the three-dimensional coordinate system based on the fourth location information; and comparing the first distance with the second distance, to obtain the occlusion relationship between the third object and the first object.

In another possible implementation, the obtaining the occlusion relationship between the third object and the first object includes: determining a front face of the first object based on the orientation change of the first object relative to the second object; and obtaining the occlusion relationship between the third object and the first object based on an included angle between an orientation of the first object and an orientation from a central point of the front face of the first object to an origin of the three-dimensional coordinate system.

In addition, before image fusion is performed, salient object detection may be performed on the target image by using a first neural network, to obtain the image of the first object and an image of another object other than the first object. Then, the image of the first object, the image of the third object, and the image of the another object are fused based on the occlusion relationship between the third object and the first object, to obtain the new target image.

For descriptions of step 903 and step 904, refer to the related descriptions in step 404 and step 405 in the embodiment shown in FIG. 4. Details are not described herein again.

In this embodiment of this application, when the third object needs to be added to the target image, the target image and the third location information of the third object in the camera coordinate system may be first obtained. The target image includes the image of the first object. Then, the target image is input into a second neural network, to obtain a pose variation of the first object relative to a second object. The second neural network is obtained through training based on second location information of the second object in the camera coordinate system. The second object is a reference object of the first object. The second location information and the third location information are preset information. Specifically, the pose variation of the first object relative to the second object indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object is associated with the orientation of the first object. Finally, the third object is rendered in the target image based on the fourth location information. In an obtained new target image, an orientation of the third object may adapt to the orientation of the first object. This can present realistic content, and improve user experience.

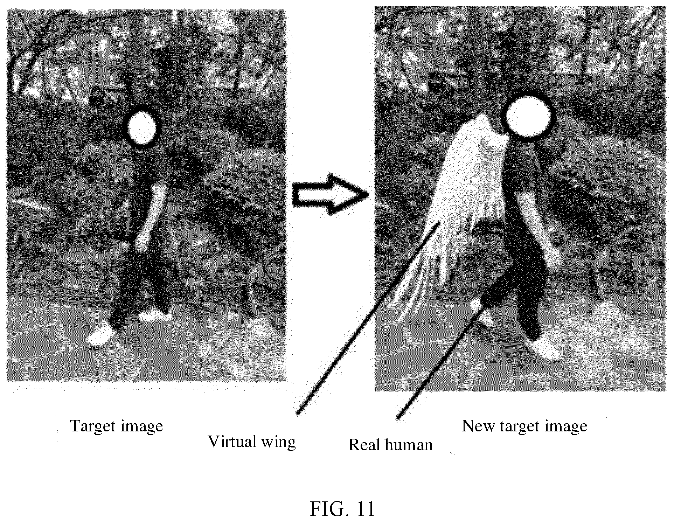

To further understand the augmented reality method provided in this embodiment of this application, the following further describes the augmented reality method with reference to FIG. 11. FIG. 11 is a schematic diagram of an application example of an augmented reality method according to an embodiment of this application. As shown in FIG. 11, the application example includes the following steps.

S 1: In response to a first operation of a user, a terminal device displays a target image. A first object is presented in the target image, and the first object is an object in a real environment. For example, when the user starts an application (for example, live broadcast software or shooting software) on the terminal device, the terminal device may display the target image shown in FIG. 11. In content presented in the target image, there is a real human that is walking left.

S2: In response to a second operation of the user, present a virtual object in the target image. The virtual object is overlaid on the first object. Still as in the foregoing example, when the user inputs an operation of adding special effect (for example, a specific virtual fin) to the started application on the terminal device, the terminal device may render the virtual wing on a back of the human in the target image. In this case, both the real human and the virtual wing are left-oriented.

S3: In response to movement of the first object, update a pose of the first object in the target image, and update a pose of the virtual object in the target image, to obtain a new target image. The pose includes a location and an orientation, and an orientation of the virtual object is associated with an orientation of the first object. Still as in the foregoing example, when the terminal device determines that the real human starts to walk right, in other words, an orientation of the real human changes, the terminal device may update a pose (including a location and an orientation) of the real human in the target image, and synchronously update a pose of the virtual wing in the target image, so that the virtual wing is still displayed on a back of the real human and the virtual wing and the real human remain right-oriented, to obtain the new target image. In this case, the orientation of the virtual wing may change with the orientation of the real human. Orientations of the virtual wing and the real human may be dynamically associated, and a relative location between the virtual wing and the real human remain unchanged.

It should be noted that the virtual object in this application example may be the third object in the foregoing embodiment. A method for calculating the pose of the virtual object may be obtained based on step 401 to step 404 in FIG. 4, or may be obtained based on step 901 to step 903 in the embodiment shown in FIG. 9. This is not limited herein.

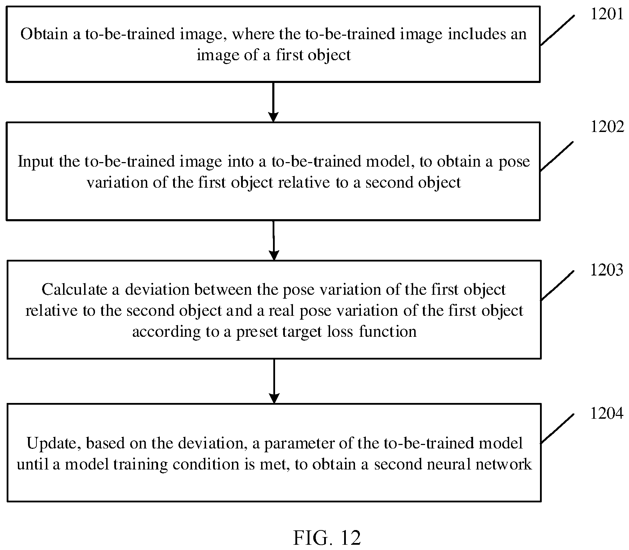

The foregoing describes in detail the augmented reality methods provided in embodiments of this application. The following introduces a model training method provided in an embodiment of this application. FIG. 12 is a schematic flowchart of a model training method according to an embodiment of this application. As shown in FIG. 12, the method includes the following steps.

1201: Obtain a to-be-trained image, where the to-be-trained image includes an image of a first obj ect.

Before model training is performed, a specific batch of to-be-trained images may be obtained. Each to-be-trained image includes an image of the first object, and forms of the first object in different to-be-trained images may be different or may be the same. For example, a real human in a to-be-trained image A faces a camera frontally, and a back of the real human in a to-be-trained image B faces the camera.

For any to-be-trained image, a real control parameter that corresponds to the to-be-trained image and that is used to adjust a second object is known. The second object is a reference object of the first object. A form of the second object may be adjusted by using the real control parameter, so that an adjusted form of the second object is the same as or similar to the form of the first object in the to-be-trained image. In this way, based on the real control parameter, it may also be determined that a real pose variation (that is, a real pose variation of the first object relative to the second object in the to-be-trained image) corresponding to the to-be-trained image is known.

It should be noted that second location information of the second object is preset in a camera coordinate system, which is equivalent to setting one original form for the second object, that is, setting an original control parameter for the second object. A real control parameter corresponding to each to-be-trained image is determined based on the original control parameter of the second object. Therefore, for any to-be-trained image, the real control parameter corresponding to the to-be-trained image is determined based on the second location information of the second object. In other words, the real pose variation corresponding to the to-be-trained image is determined based on the second location information of the second object.

It should be understood that, for descriptions of the first object, the second object, and the second location information of the second object, refer to the related descriptions of step 401 and step 402 in the embodiment shown in FIG. 4. Details are not described herein again.

1202: Input the to-be-trained image into a to-be-trained model, to obtain a pose variation of the first object relative to the second object.

Any to-be-trained image is input into the to-be-trained model, so that the to-be-trained model can output a pose variation corresponding to the to-be-trained image, which may be understood as a predicted pose variation of the first object relative to the second object in the to-be-trained image.

1203: Calculate a deviation between the pose variation of the first object relative to the second object and a real pose variation of the first object based on a preset target loss function.

After the predicted pose variation corresponding to any to-be-trained image, a deviation between the pose variation corresponding to the trained image and a real pose variation corresponding to the trained image based on a preset target loss function. In this case, a deviation corresponding to each to-be-trained image in the batch of to-be-trained images may be obtained.

1204: Update, based on the deviation, a parameter of the to-be-trained model until a model training condition is met, to obtain a second neural network.

If a deviation corresponding to any to-be-trained image falls within a qualified range, the to-be-trained image is considered as a qualified to-be-trained image. Alternatively, if a deviation corresponding to any to-be-trained image falls outside a qualified range, the to-be-trained image is considered as an unqualified to-be-trained image. If there are only a small quantity of qualified to-be-trained images in the batch of to-be-trained images, the parameter of the to-be-trained model is adjusted, and another batch of to-be-trained images is used for training (that is, step 1201 to step 1204 are performed again), until there are a large quantity of qualified to-be-trained images, to obtain the second neural network in the embodiment shown in FIG. 9.

In this embodiment of this application, the pose variation of the object in the target image can be accurately obtained by using the second neural network obtained through training by using the training method.

An embodiment of this application further relates to a model training method. The method includes: obtaining a to-be-trained image; obtaining an image of a first object by using a to-be-trained model; calculating a deviation between the image of the first object and a real image of the first object based on a preset target loss function; and updating, based on the deviation, a parameter of the to-be-trained model until a model training condition is met, to obtain a first neural network.

Before model training is performed, a specific batch of to-be-trained images is obtained, and a real image of the first object in each to-be-trained image is predetermined. After training starts, a specific to-be-trained image may be input to the to-be-trained model. Then, the image (a predicted image) of the first object in the to-be-trained image is obtained by using the to-be-trained model. Finally, the deviation between the image of the first object output by the to-be-trained model and the real image of the first object in the to-be-trained image is calculated based on the target loss function. If the deviation falls within a qualified range, the to-be-trained image is considered as a qualified to-be-trained image. Alternatively, if the deviation falls outside a qualified range, the to-be-trained image is considered as an unqualified to-be-trained image. For each of the batch of to-be-trained images, the foregoing process needs to be performed. Details are not described herein again. If there are only a small quantity of qualified to-be-trained images in the batch of to-be-trained images, the parameter of the to-be-trained model is adjusted, and another batch of to-be-trained images is used for training, until there are a large quantity of qualified to-be-trained images, to obtain the first neural network in the embodiment shown in FIG. 4 or FIG. 9.

In this embodiment of this application, the image of the first object in the target image can be accurately obtained by using the first neural network obtained through training by using the method.

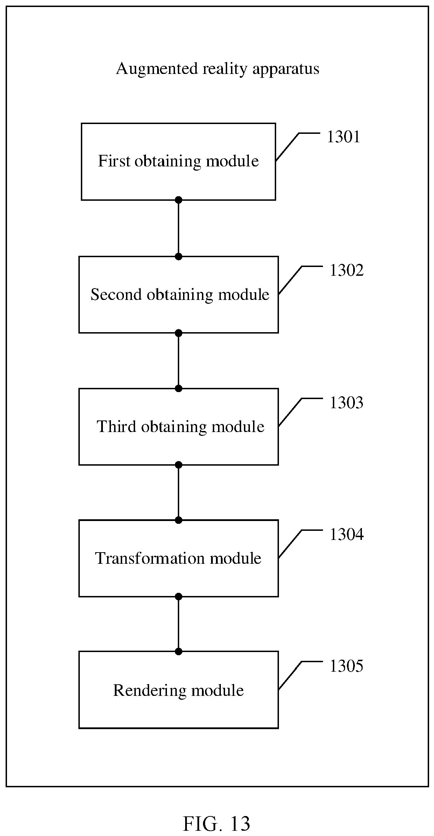

The foregoing describes in detail the model training method provided in this embodiment of this application, and the following describes an augmented reality apparatus provided in an embodiment of this application. FIG. 13 is a schematic diagram of a structure of an augmented reality apparatus according to an embodiment of this application. As shown in FIG. 13, the apparatus includes:

a first obtaining module 1301, configured to obtain a target image shot by a camera and first location information of a first object in the target image;
a second obtaining module 1302, configured to obtain second location information of a second object in a three-dimensional coordinate system and third location information of a third object in the three-dimensional coordinate system, where the second object is a reference object of the first object, and the second location information and the third location information are preset information;

a third obtaining module 1303, configured to obtain a pose variation of the first object relative to the second object based on the first location information and the second location information;

a transformation module 1304, configured to transform the third location information based on the pose variation, to obtain fourth location information of the third object in the three-dimensional coordinate system; and

a rendering module 1305, configured to render the third object in the target image based on the fourth location information, to obtain a new target image.

In this embodiment of this application, when the third object needs to be added to the target image, the second location information of the second obj ect in the camera coordinate system, the third location information of the third object in the camera coordinate system, and the first location information of the first object in the target image in the image coordinate system may be first obtained. The second location information and the third location information are preset information. Because the second object is a reference object of the first object, a pose variation of the first object relative to the second object may be determined based on the second location information and the first location information. The pose variation indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object may be associated with the orientation of the first object (for example, orientations of the third object and the first object are the same or similar). Finally, the third object is rendered in the target image based on the fourth location information. In an obtained new target image, an orientation of the third object may adapt to the orientation of the first object. This can present realistic content, and improve user experience.

In a possible implementation, the third obtaining module 1303 is configured to: obtain depth information of the first object; obtain fifth location information of the first object in the three-dimensional coordinate system based on the first location information and the depth information; and calculate a variation between the second location information and the fifth location information, to obtain the pose variation of the first object relative to the second object.

In a possible implementation, the third obtaining module 1303 is configured to: transform the second location information, to obtain fifth location information of the first object in the three-dimensional coordinate system; and project the fifth location information to the target image, to obtain sixth location information. If a variation between the sixth location information and the first location information meets a preset condition, the pose variation of the first object relative to the second object is the transformation matrix for transforming the second location information.

In a possible implementation, the rendering module 1305 is configured to: perform pinhole imaging based on the fourth location information, to obtain an image of the third object; obtain an occlusion relationship between the third object and the first object; and fuse the image of the third object and an image of the first object based on the occlusion relationship, to obtain the new target image.

In a possible implementation, the rendering module 1305 is configured to: calculate a first distance between the first object and an origin of the three-dimensional coordinate system based on the fifth location information; calculate a second distance between the third object and the origin of the three-dimensional coordinate system based on the fourth location information; and compare the first distance with the second distance, to obtain the occlusion relationship between the third object and the first object.

In a possible implementation, the rendering module 1305 is configured to: obtain a correspondence between a plurality of surface points of the first object and a plurality of surface points of the second object; obtain distribution of the plurality of surface points of the first object on the second object based on the correspondence; and obtain the occlusion relationship between the third object and the first object based on the distribution.

In a possible implementation, the pose variation includes an orientation change of the first object relative to the second object, and the rendering module 1305 is configured to: determine a front face of the first object based on the orientation change of the first object relative to the second object; and obtain the occlusion relationship between the third object and the first object based on an included angle between an orientation of the first object and an orientation from a central point of the front face of the first object to an origin of the three-dimensional coordinate system.

In a possible implementation, the rendering module 1305 is further configured to input the target image into a first neural network, to obtain the image of the first object.

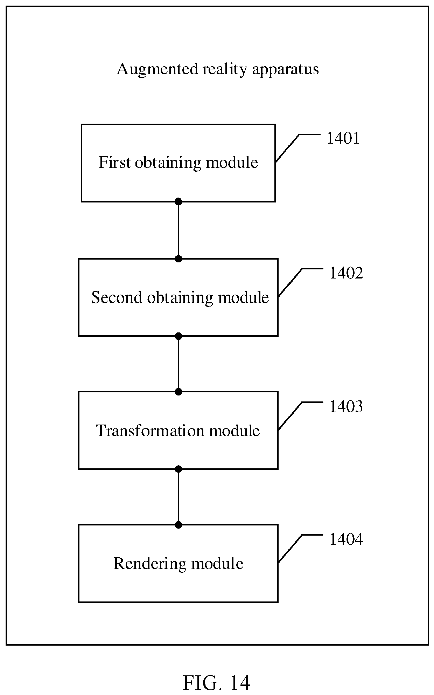

FIG. 14 is another schematic diagram of a structure of an augmented reality apparatus according to an embodiment of this application. As shown in FIG. 14, the apparatus includes:

a first obtaining module 1401, configured to obtain a target image shot by a camera and third location information of a third object in a three-dimensional coordinate system corresponding to the camera, where the target image includes an image of a first object;

a second obtaining module 1402, configured to input the target image into a second neural network, to obtain a pose variation of the first object relative to a second object, where the second neural network is obtained through training based on second location information of the second object in the three-dimensional coordinate system, the second object is a reference object of the first object, and the second location information and the third location information are preset information;

a transformation module 1403, configured to transform the third location information based on the pose variation, to obtain fourth location information of the third object in the three-dimensional coordinate system; and

a rendering module 1404, configured to render the third object in the target image based on the fourth location information, to obtain a new target image.

In this embodiment of this application, when the third object needs to be added to the target image, the target image and the third location information of the third object in the camera coordinate system may be first obtained. The target image includes the image of the first object. Then, the target image is input into a second neural network, to obtain a pose variation of the first object relative to a second object. The second neural network is obtained through training based on second location information of the second object in the camera coordinate system. The second object is a reference object of the first object. The second location information and the third location information are preset information. Specifically, the pose variation of the first object relative to the second object indicates both the location change and the orientation change from the second object to the first object in the camera coordinate system. In this case, the same location change and the same orientation change may occur on the third object, that is, the fourth location information of the third object in the camera coordinate system is determined based on the pose variation and the third location information of the third object. In this way, a final orientation of the third object is associated with the orientation of the first object. Finally, the third object is rendered in the target image based on the fourth location information. In an obtained new target image, an orientation of the third object may adapt to the orientation of the first object. This can present realistic content, and improve user experience.

In a possible implementation, the rendering module 1404 is configured to: perform pinhole imaging based on the fourth location information, to obtain an image of the third object; obtain an occlusion relationship between the third object and the first object; and fuse the image of the third object and the image of the first object based on the occlusion relationship, to obtain the new target image.

In a possible implementation, the transformation module 1403 is further configured to transform the second location information based on the pose variation, to obtain fifth location information of the first object in the three-dimensional coordinate system corresponding to a camera.

In a possible implementation, the rendering module 1404 is configured to: calculate a first distance between the first object and an origin of the three-dimensional coordinate system based on the fifth location information; calculate a second distance between the third object and the origin of the three-dimensional coordinate system based on the fourth location information; and compare the first distance with the second distance, to obtain the occlusion relationship between the third object and the first object.

In a possible implementation, the pose variation includes an orientation change of the first object relative to the second object, and the rendering module 1404 is configured to: determine a front face of the first object based on the orientation change of the first object relative to the second object; and obtain the occlusion relationship between the third object and the first object based on an included angle between an orientation of the first object and an orientation from a central point of the front face of the first object to an origin of the three-dimensional coordinate system.

In a possible implementation, the rendering module 1404 is further configured to input the target image into a first neural network, to obtain the image of the first object.

An embodiment of this application further relates to another image processing apparatus. The apparatus includes: a display module, configured to: in response to a first operation of a user, display a target image, where a first object is presented in the target image, and the first object is an object in a real environment; a presentation module, configured to: in response to a second operation of the user, present a virtual object in the target image, where the virtual object is overlaid on the first object; and an update module, configured to: in response to movement of the first object, update a pose of the first object in the target image, and update a pose of the virtual object in the target image, to obtain a new target image. The pose includes a location and an orientation, and an orientation of the virtual object is associated with an orientation of the first object.

It can be learned from the foregoing apparatus that when the image processing apparatus responds to the operation of the user, the image processing apparatus may display the target image. The target image presents the moving first object. Therefore, when the image processing apparatus adds a virtual object indicated by the user to the target image, a pose of the first object in the target image and a pose of the virtual object are updated as the first object moves. In this way, the orientation of the virtual object is associated with the orientation of the first object, so that content presented by the new target image is realistic. This improves user experience.

In a possible implementation, in the new target image, the orientation of the virtual object is the same as the orientation of the first object, and a relative location between the virtual object and the first object remains unchanged after the pose of the first object and the pose of the virtual object are updated.

In a possible implementation, the first object is a human, and the virtual object is a virtual wing.

In a possible implementation, the first operation is an operation of starting an application, and the second operation is an operation of adding special effect.

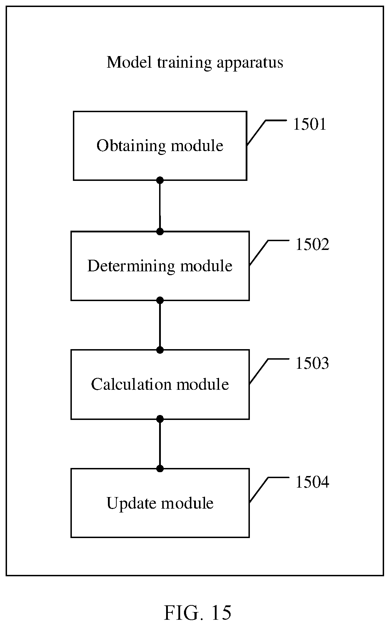

The foregoing describes in detail the augmented reality apparatus provided in this embodiment of this application, and the following describes a model training apparatus provided in an embodiment of this application. FIG. 15 is a schematic diagram of a structure of a model training apparatus according to an embodiment of this application. As shown in FIG. 15, the apparatus includes:

an obtaining module 1501, configured to obtain a to-be-trained image, where the to-be-trained image includes an image of a first object;

a determining module 1502, configured to input the to-be-trained image into a to-be-trained model, to obtain a pose variation of the first object relative to the second object;

a calculation module 1503, configured to calculate a deviation between the pose variation of the first object relative to the second object and a real pose variation of the first object based on a preset target loss function, where the real pose variation of the first object is determined based on second location information of the second object in a camera coordinate system, the second object is a reference object of the first object, and the second location information is preset information; and

an update module 1504, configured to update, based on the deviation, a parameter of the to-be-trained model until a model training condition is met, to obtain a second neural network.

In this embodiment of this application, the pose variation of the object in the target image can be accurately obtained by using the second neural network obtained through training by using the apparatus.

An embodiment of this application further relates to a model training apparatus. The apparatus includes: a first obtaining module, configured to obtain a to-be-trained image; a second obtaining module, configured to obtain an image of a first object by using a to-be-trained model; a calculation module, configured to calculate a deviation between the image of the first object and a real image of the first object based on a preset target loss function; and an update module, configured to update, based on the deviation, a parameter of the to-be-trained model until a model training condition is met, to obtain a first neural network.

In this embodiment of this application, the image of the first object in the target image can be accurately obtained by using the first neural network obtained through training by using the apparatus.

It should be noted that content such as information exchange between the modules/units of the apparatus and the execution processes thereof is based on the same idea as that of the method embodiments of this application, and produces the same technical effects as that of the method embodiments of this application. For specific content, refer to the foregoing descriptions in the method embodiments of this application. Details are not described herein again.

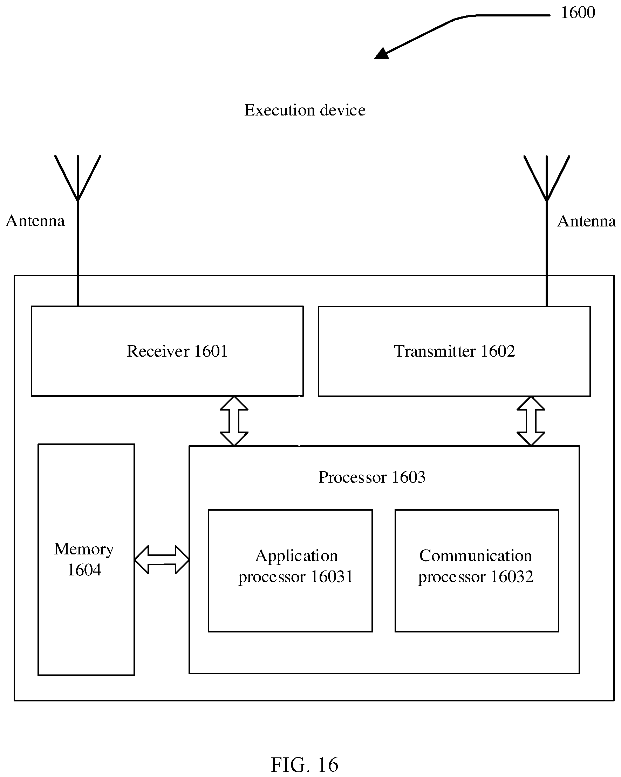

An embodiment of this application further relates to an execution device. FIG. 16 is a schematic diagram of a structure of an execution device according to an embodiment of this application. As shown in FIG. 16, the execution device 1600 may be specifically a mobile phone, a tablet, a notebook computer, an intelligent wearable device, a server, or the like. This is not limited herein. The augmented reality apparatus described in the embodiment corresponding to FIG. 13 or FIG. 14 may be deployed on the execution device 1600, and is configured to implement the image processing function in the embodiment corresponding to FIG. 4 or FIG. 9. Specifically, the execution device 1600 includes a receiver 1601, a transmitter 1602, a processor 1603, and a memory 1604 (there may be one or more processors 1603 in the execution device 1600, and one processor is used as an example in FIG. 16). The processor 1603 may include an application processor 16031 and a communication processor 16032. In some embodiments of this application, the receiver 1601, the transmitter 1602, the processor 1603, and the memory 1604 may be connected through a bus or in another manner.

The memory 1604 may include a read-only memory and a random access memory, and provide instructions and data for the processor 1603. A part of the memory 1604 may further include a nonvolatile random access memory (non-volatile random access memory, NVRAM). The memory 1604 stores a processor and operation instructions, an executable module or a data structure, a subnet thereof, or an expanded set thereof. The operation instructions may include various operation instructions, to implement various operations.

The processor 1603 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1603, or may be implemented by the processor 1603. The processor 1603 may be an integrated circuit chip, and has a signal processing capability. In an implementation process, steps in the foregoing methods may be implemented by using a hardware integrated logical circuit in the processor 1603, or by using instructions in a form of software. The processor 1603 may be a general-purpose processor, a digital signal processor (digital signal processor, DSP), a microprocessor, or a microcontroller. The processor 1603 may further include an application-specific integrated circuit (application-specific integrated circuit, ASIC), a field-programmable gate array (field-programmable gate array, FPGA) or another programmable logic device, a discrete gate, a transistor logic device, or a discrete hardware component. The processor 1603 may implement or perform the method, the steps, and the logical block diagrams disclosed in embodiments of this application. The general-purpose processor may be a microprocessor, or any conventional processor. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory 1604, and the processor 1603 fetches information in the memory 1604, and completes the steps of the foregoing method in combination with its hardware.

The receiver 1601 may be configured to: receive input digital or character information, and generate a signal input related to setting and function control of the execution device. The transmitter 1602 may be configured to output the digital or character information through a first interface. The transmitter 1602 may further be configured to send instructions to a disk group through the first interface, to modify data in the disk group. The transmitter 1602 may further include a display device such as a display.

In this embodiment of this application, in one case, the processor 1603 is configured to perform the augmented reality method performed by the terminal device in the embodiment corresponding to FIG. 4 or FIG. 9.

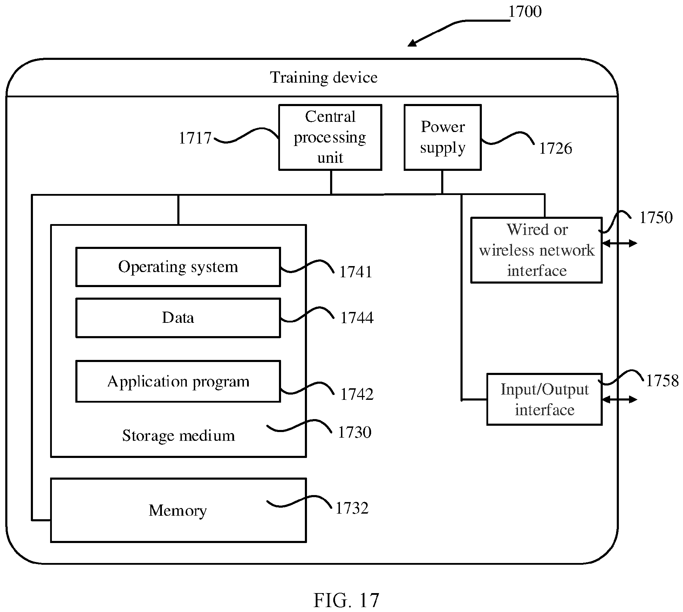

An embodiment of this application further relates to a training device. FIG. 17 is a schematic of a structure of a training device according to an embodiment of this application. As shown in FIG. 17, the training device 1700 is implemented by one or more servers. The training device 1700 may have a relatively large difference due to different configurations or performance, and may include one or more central processing units (central processing units, CPUs) 1717 (for example, one or more processors) and a memory 1732, and one or more storage media 1730 (for example, one or more mass storage devices) that store an application program 1742 or data 1744. The memory 1732 and the storage medium 1730 may be for temporary storage or permanent storage. A program stored in the storage medium 1730 may include one or more modules (not shown in the figure), and each module may include a series of instruction operations for the training device. Further, the central processing unit 1717 may be configured to: communicate with the storage medium 1730, and perform the series of instruction operations in the storage medium 1730 on the training device 1700.

The training device 1700 may further include one or more power supplies 1726, one or more wired or wireless network interfaces 1750, one or more input/output interfaces 1758, or one or more operating systems 1741, such as Windows ServerTM, Mac OS XTM, UnixTM, LinuxTM, and FreeBSDTM.

Specifically, the training device may perform the steps in the embodiment corresponding to FIG. 12.

An embodiment of this application further provides a computer storage medium. The computer-readable storage medium stores a program used to perform signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the foregoing embodiment, or a chip in the training device performs the data processing method described in the foregoing embodiment. Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

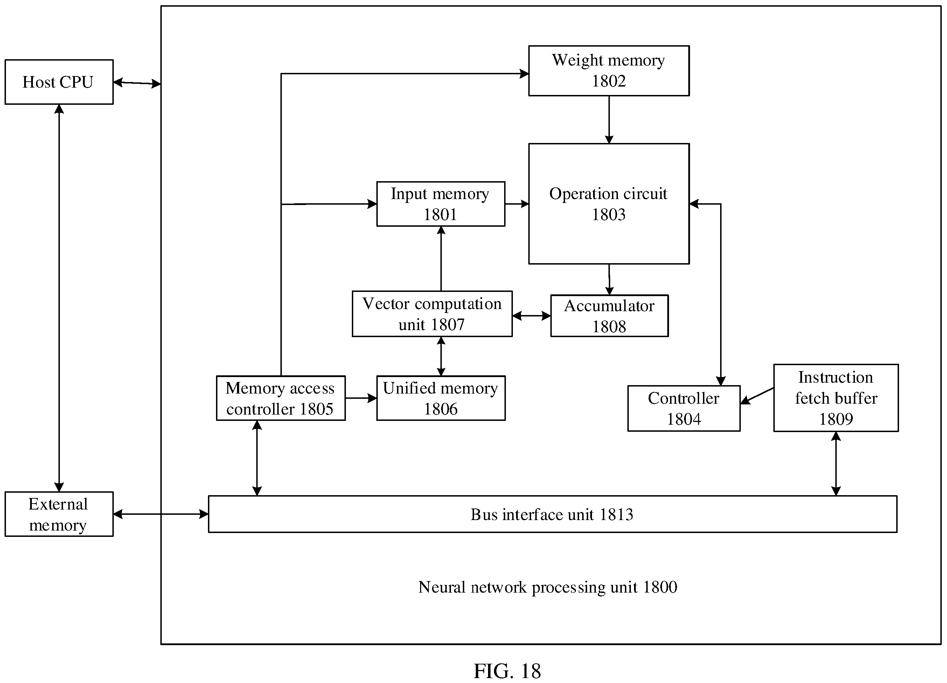

Specifically, FIG. 18 is a schematic diagram of a structure of a chip according to an embodiment of this application. The chip may be represented as a neural network processing unit NPU 1800. The NPU 1800 is mounted to a host CPU (Host CPU) as a coprocessor, and the host CPU allocates a task. A core part of the NPU is an operation circuit 1803, and a controller 1804 controls the operation circuit 1803 to extract matrix data in a memory and perform a multiplication operation.

In some implementations, the operation circuit 1803 includes a plurality of process engines (Process Engines, PEs) inside. In some implementations, the operation circuit 1803 is a two-dimensional systolic array. The operation circuit 1803 may alternatively be a one-dimensional systolic array or another electronic circuit capable of performing mathematical operations such as multiplication and addition. In some implementations, the operation circuit 1803 is a general-purpose matrix processor.

For example, it is assumed that there is an input matrix A, a weight matrix B, and an output matrix C. The operation circuit fetches data corresponding to the matrix B from a weight memory 1802, and buffers the data on each PE in the operation circuit. The operation circuit fetches data of the matrix A from an input memory 1801 to perform a matrix operation on the matrix B, and stores an obtained partial result or an obtained final result of the matrix in an accumulator (accumulator) 1808.

A unified memory 1806 is configured to store input data and output data. Weight data is directly transferred to the weight memory 1802 through a direct memory access controller (Direct Memory Access Controller, DMAC) 1805. The input data is also transferred to the unified memory 1806 by using the DMAC.

A BIU is a bus interface unit, namely, a bus interface unit 1810, and is used for interaction between an AXI bus and the DMAC and between the AXI bus and an instruction fetch buffer (Instruction Fetch Buffer, IFB) 1809.

The bus interface unit (Bus Interface Unit, BIU for short) 1810 is used by the instruction fetch buffer 1809 to obtain instructions from an external memory, and is further used by the direct memory access controller 1805 to obtain original data of the input matrix A or the weight matrix B from the external memory.

The DMAC is mainly configured to transfer input data in the external memory DDR to the unified memory 1806, transfer weight data to the weight memory 1802, or transfer input data to the input memory 1801.

A vector calculation unit 1807 includes a plurality of operation processing units; and if necessary, performs further processing such as vector multiplication, vector addition, an exponential operation, a logarithmic operation, or value comparison on an output of the operation circuit 1803. The vector calculation unit 1807 is mainly configured to perform network calculation, such as batch normalization (batch normalization), pixel-level summation, and upsampling on a feature plane, at a non-convolutional/fully connected layer in a neural network.

In some implementations, the vector calculation unit 1807 can store a processed output vector in the unified memory 1806. For example, the vector calculation unit 1807 may apply a linear function or a non-linear function to the output of the operation circuit 1803, for example, perform linear interpolation on a feature plane extracted at a convolutional layer. For another example, the vector calculation unit 1807 may apply a linear function or a non-linear function to a vector of an accumulated value, to generate an activation value. In some implementations, the vector calculation unit 1807 generates a normalized value, a pixel-level summation value, or both. In some implementations, the processed output vector can be used as an activation input to the operation circuit 1803, for example, used in a subsequent layer in the neural network.

The instruction fetch buffer (instruction fetch buffer) 1809 connected to the controller 1804 is configured to store instructions used by the controller 1804.

The unified memory 1806, the input memory 1801, the weight memory 1802, and the instruction fetch buffer 1809 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the described apparatus embodiments are only examples. The units described as separate parts may or may not be physically separate, and parts displayed as units may or may not be physical units, may be located in one location, or may be distributed on a plurality of network units. Some or all of the modules may be selected based on an actual requirement, to achieve objectives of the solutions in embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the process or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

**Claims**

1.  An augmented reality method, comprising:

    in response to a first operation of a user, displaying a target image, wherein a first object is presented in the target image, and the first object is an object in a real environment;
    in response to a second operation of the user, presenting a virtual object in the target image, wherein the virtual object is overlaid on the first object; and
    in response to movement of the first object, updating a pose of the first object in the target image, and updating a pose of the virtual object in the target image, to obtain a new target image, wherein the pose comprises a location and an orientation, and an orientation of the virtual object is associated with an orientation of the first object.

2.  The method according to claim 1, wherein in the new target image, the orientation of the virtual object is the same as the orientation of the first object, and a relative location between the virtual object and the first object remains unchanged after the pose of the first object and the pose of the virtual object are updated.

3.  The method according to claim 1 or 2, wherein the first object is a human, and the virtual object is a virtual wing.

4.  The method according to any one of claims 1 to 3, wherein the first operation is an operation of starting an application, and the second operation is an operation of adding special effect.

5.  An augmented reality method, comprising:

    obtaining a target image and first location information of a first object in the target image;
    obtaining second location information of a second object in a three-dimensional coordinate system and third location information of a third object in the three-dimensional coordinate system, wherein the second object is a reference object of the first object, and the second location information and the third location information are preset information;
    obtaining a pose variation of the first object relative to the second object based on the first location information and the second location information;
    transforming the third location information based on the pose variation, to obtain fourth location information of the third object in the three-dimensional coordinate system; and
    rendering the third object in the target image based on the fourth location information, to obtain a new target image.

6.  The method according to claim 5, wherein the obtaining a pose variation of the first object relative to the second object based on the first location information and the second location information comprises:

obtaining depth information of the first object;

obtaining fifth location information of the first object in the three-dimensional coordinate system based on the first location information and the depth information; and

obtaining the pose variation of the first object relative to the second object based on the second location information and the fifth location information.

7.  The method according to claim 5, wherein the obtaining a pose variation of the first object relative to the second object based on the first location information and the second location information comprises:

transforming the second location information, to obtain fifth location information of the first object in the three-dimensional coordinate system; and

projecting the fifth location information to the target image, to obtain sixth location information, wherein

if a variation between the sixth location information and the first location information meets a preset condition, the pose variation of the first object relative to the second object is a transformation matrix for transforming the second location information.

8.  The method according to claim 6 or 7, wherein the rendering the third object in the target image based on the fourth location information, to obtain a new target image comprises:

performing pinhole imaging based on the fourth location information, to obtain an image of the third object;

obtaining an occlusion relationship between the third object and the first object; and

fusing the image of the third object and an image of the first object based on the occlusion relationship, to obtain the new target image.

9.  The method according to claim 8, wherein the obtaining an occlusion relationship between the third object and the first object comprises:

calculating a first distance between the first object and an origin of the three-dimensional coordinate system based on the fifth location information;

calculating a second distance between the third object and the origin of the three-dimensional coordinate system based on the fourth location information; and

comparing the first distance with the second distance, to obtain the occlusion relationship between the third object and the first object.

10.  The method according to claim 8, wherein the obtaining an occlusion relationship between the third object and the first object comprises:

obtaining a correspondence between a plurality of surface points of the first object and a plurality of surface points of the second object;

obtaining distribution of the plurality of surface points of the first object on the second object based on the correspondence; and

obtaining the occlusion relationship between the third object and the first object based on the distribution.

11.  The method according to claim 8, wherein the pose variation comprises an orientation change of the first object relative to the second object, and the obtaining an occlusion relationship between the third object and the first object comprises:

determining a front face of the first object based on the orientation change of the first object relative to the second object; and

obtaining the occlusion relationship between the third object and the first object based on an included angle between an orientation of the first object and an orientation from a central point of the front face of the first object to an origin of the three-dimensional coordinate system.

12.  The method according to any one of claims 8 to 11, wherein the method further comprises: inputting the target image into a first neural network, to obtain the image of the first object.

13.  An augmented reality method, comprising:

obtaining a target image and third location information of a third object in a three-dimensional coordinate system, wherein the target image comprises an image of a first object;

inputting the target image into a second neural network, to obtain a pose variation of the first object relative to a second object, wherein the second neural network is obtained through training based on second location information of the second object in the three-dimensional coordinate system, the second object is a reference object of the first object, and the second location information and the third location information are preset information;

transforming the third location information based on the pose variation, to obtain fourth location information of the third object in the three-dimensional coordinate system; and

rendering the third object in the target image based on the fourth location information, to obtain a new target image.

14. The method according to claim 13, wherein the rendering the third object in the target image based on the fourth location information, to obtain a new target image comprises:

performing pinhole imaging based on the fourth location information, to obtain an image of the third object; obtaining an occlusion relationship between the third object and the first object; and

fusing the image of the third object and the image of the first object based on the occlusion relationship, to obtain the new target image.

15. The method according to claim 14, wherein the method further comprises:
transforming the second location information based on the pose variation, to obtain fifth location information of the first object in the three-dimensional coordinate system corresponding to a camera.

16. The method according to claim 15, wherein the obtaining an occlusion relationship between the third object and the first object comprises:

calculating a first distance between the first object and an origin of the three-dimensional coordinate system based on the fifth location information;

calculating a second distance between the third object and the origin of the three-dimensional coordinate system based on the fourth location information; and

comparing the first distance with the second distance, to obtain the occlusion relationship between the third object and the first object.

17. The method according to claim 14, wherein the pose variation comprises an orientation change of the first object relative to the second object, and the obtaining an occlusion relationship between the third object and the first object comprises:

determining a front face of the first object based on the orientation change of the first object relative to the second object; and

obtaining the occlusion relationship between the third object and the first object based on an angle between an orientation of the first object and an orientation from a central point of the front face of the first object to an origin of the three-dimensional coordinate system.

18. The method according to any one of claims 14 to 17, wherein the method further comprises: inputting the target image into a first neural network, to obtain the image of the first object.

19. An augmented reality apparatus, wherein the apparatus comprises:

a display module, configured to: in response to a first operation of a user, display a target image, wherein a first object is presented in the target image, and the first object is an object in a real environment;

A presentation module, configured to: in response to a second operation of the user, present a virtual object in the target image, wherein the virtual object is overlaid on the first object; and

an update module, configured to: in response to movement of the first object, update a pose of the first object in the target image, and update a pose of the virtual object in the target image, to obtain a new target image, wherein the pose comprises a location and an orientation, and an orientation of the virtual object is associated with an orientation of the first object.

**20.** The apparatus according to claim 19, wherein in the new target image, the orientation of the virtual object is the same as the orientation of the first object, and a relative location between the virtual object and the first object remains unchanged after the pose of the first object and the pose of the virtual object are updated.

**21.** The apparatus according to claim 19 or 20, wherein the first object is a human, and the virtual object is a virtual wing.

**22.** The apparatus according to any one of claims 19 to 21, wherein the first operation is an operation of starting an application, and the second operation is an operation of adding special effect.

**23.** An augmented reality apparatus, wherein the apparatus comprises:

a first obtaining module, configured to obtain a target image and first location information of a first object in the target image;
a second obtaining module, configured to obtain second location information of a second object in a three-dimensional coordinate system and third location information of a third object in the three-dimensional coordinate system, wherein the second object is a reference object of the first object, and the second location information and the third location information are preset information;
a third obtaining module, configured to obtain a pose variation of the first object relative to the second object based on the first location information and the second location information;
a transformation module, configured to transform the third location information based on the pose variation, to obtain fourth location information of the third object in the three-dimensional coordinate system; and
a rendering module, configured to render the third object in the target image based on the fourth location information, to obtain a new target image.

**24.** The apparatus according to claim 23, wherein the third obtaining module is configured to:

obtain depth information of the first object;
obtain fifth location information of the first object in the three-dimensional coordinate system based on the first location information and the depth information; and
obtain a pose variation of the first object relative to the second object based on the second location information and the fifth location information.

**25.** The apparatus according to claim 23, wherein the third obtaining module is configured to:

transform the second location information, to obtain fifth location information of the first object in the three-dimensional coordinate system; and
project the fifth location information to the target image, to obtain sixth location information, wherein
if a variation between the sixth location information and the first location information meets a preset condition, the pose variation of the first object relative to the second object is a transformation matrix for transforming the second location information.

**26.** The apparatus according to claim 24 or 25, wherein the rendering module is configured to:

perform pinhole imaging based on the fourth location information, to obtain an image of the third object;
obtain an occlusion relationship between the third object and the first object; and
fuse the image of the third object and an image of the first object based on the occlusion relationship, to obtain the new target image.

**27.** The apparatus according to claim 26, wherein the rendering module is configured to:

calculate a first distance between the first object and an origin of the three-dimensional coordinate system based on the fifth location information;
calculate a second distance between the third object and the origin of the three-dimensional coordinate system based on the fourth location information; and
compare the first distance with the second distance, to obtain the occlusion relationship between the third object and the first object.

**28.** The apparatus according to claim 26, wherein the rendering module is configured to:

obtain a correspondence between a plurality of surface points of the first object and a plurality of surface points of the second object;

obtain distribution of the plurality of surface points of the first object on the second object based on the correspondence; and

obtain the occlusion relationship between the third object and the first object based on the distribution.

29. The apparatus according to claim 26, wherein the pose variation comprises an orientation change of the first object relative to the second object, and the rendering module is configured to:

determine a front face of the first object based on the orientation change of the first object relative to the second object; and

obtain the occlusion relationship between the third object and the first object based on an angle between an orientation of the first object and an orientation from a central point of the front face of the first object to an origin of the three-dimensional coordinate system.

30. The apparatus according to any one of claims 26 to 29, wherein the rendering module is further configured to input the target image into a first neural network, to obtain the image of the first object.

31. An augmented reality apparatus, wherein the apparatus comprises:

a first obtaining module, configured to obtain a target image and third location information of a third object in a three-dimensional coordinate system, wherein the target image comprises an image of a first object;

a second obtaining module, configured to input the target image into a second neural network, to obtain a pose variation of the first object relative to a second object, wherein the second neural network is obtained through training based on second location information of the second object in the three-dimensional coordinate system, the second object is a reference object of the first object, and the second location information and the third location information are preset information;

a transformation module, configured to transform the third location information based on the pose variation, to obtain fourth location information of the third object in the three-dimensional coordinate system; and

a rendering module, configured to render the third object in the target image based on the fourth location information, to obtain a new target image.

32. The apparatus according to claim 31, wherein the rendering module is configured to:

perform pinhole imaging based on the fourth location information, to obtain an image of the third object;

obtain an occlusion relationship between the third object and the first object; and

fuse the image of the third object and the image of the first object based on the occlusion relationship, to obtain the new target image.

33. The apparatus according to claim 32, wherein the transformation module is further configured to:
transform the second location information based on the pose variation, to obtain fifth location information of the first object in the three-dimensional coordinate system corresponding to a camera.

34. The apparatus according to claim 33, wherein the rendering module is configured to:

calculate a first distance between the first object and an origin of the three-dimensional coordinate system based on the fifth location information;

calculate a second distance between the third object and the origin of the three-dimensional coordinate system based on the fourth location information; and

compare the first distance with the second distance, to obtain the occlusion relationship between the third object and the first object.

35. The apparatus according to claim 32, wherein the pose variation comprises an orientation change of the first object relative to the second object, and the rendering module is configured to:

determine a front face of the first object based on the orientation change of the first object relative to the second object; and

obtain the occlusion relationship between the third object and the first object based on an angle between an orientation of the first object and an orientation from a central point of the front face of the first object to an origin of the three-dimensional coordinate system.

36. The apparatus according to any one of claims 32 to 35, wherein the rendering module is further configured to input the target image into a first neural network, to obtain the image of the first object.

37. An augmented reality apparatus, comprising a memory and a processor, wherein the memory stores code, the processor is configured to execute the code, and when the code is executed, the augmented reality apparatus performs the method according to any one of claims 1 to 18.

38. A computer storage medium, wherein the computer storage medium stores a computer program, and when the program is executed by a computer, the computer is enabled to perform the method according to any one of claims 1 to 18.

39. A computer program product, wherein the computer program product stores instructions, and when the instructions are executed by a computer, the computer is enabled to perform the method according to any one of claims 1 to 18.

IT value chain

Intelligent information chain

Intelligent product and industry application

Translation/Text analysis/...

Speech/Vision/Image/...

Data processing:

Data training/Machine learning/Deep learning

Searching/Inference/Decision-making

...

Data

Infrastructure

Sensor

Intelligent chip

Basic platform

...

FIG. 1

FIG. 2a

Interaction interface

To-be-processed image

Processed image

Processor

Data training/Machine learning/Deep learning

Searching/ Inference/ Decision-making

Memory

Data processing device (server)

13:21

FIG. 2b

EP 4 290 459 A1

FIG. 2c

EP 4 290 459 A1

FIG. 3a

Standard human model

Image

FIG. 3b

| Obtain a target image shot by a camera and first location information of a first object in the target image | 401 |
| Obtain second location information of a second object in a three-dimensional coordinate system and third location information of a third object in the three-dimensional coordinate system, where the second object is a reference object of the first object, and the second location information and the third location information are preset information | 402 |
| Determine a pose variation of the first object relative to the second object based on the first location information and the second location information | 403 |
| Transform the third location information based on the pose variation, to obtain fourth location information of the third object in the three-dimensional coordinate system | 404 |
| Render the third object in the target image based on the fourth location information, to obtain a new target image | 405 |

FIG. 4

Real human

FIG. 5

FIG. 6

Y-axis

X-axis

Rotated and
translated wing

Wing

Real human

Pose variation

Standard human
model

Z-axis

FIG. 7

First object

Front face

Camera

FIG. 8

Obtain a target image shot by a camera and third location
information of a third object in a three-dimensional coordinate
system corresponding to the camera, where the target image
includes an image of a first object

901

Input the target image into a second neural network, to obtain a
pose variation of the first object relative to a second object, where
the second neural network is obtained through training based on
second location information of the second object in the three-
dimensional coordinate system, the second object is a reference
object of the first object, and the second location information and
the third location information are preset information

902

Transform the third location information based on the pose
variation, to obtain fourth location information of the third object in
the three-dimensional coordinate system

903

Render the third object in the target image based on the fourth
location information, to obtain a new target image

904

FIG. 9

(β, θ)                    (β1, θ1)

FIG. 10

Target image        Virtual wing     Real human     New target image

FIG. 11

Obtain a to-be-trained image, where the to-be-trained image includes an
image of a first object

1201

Input the to-be-trained image into a to-be-trained model, to obtain a pose
variation of the first object relative to a second object

1202

Calculate a deviation between the pose variation of the first object
relative to the second object and a real pose variation of the first object
according to a preset target loss function

1203

Update, based on the deviation, a parameter of the to-be-trained model
until a model training condition is met, to obtain a second neural network

1204

FIG. 12

Augmented reality apparatus

First obtaining module —— 1301

Second obtaining module —— 1302

Third obtaining module —— 1303

Transformation module —— 1304

Rendering module —— 1305

FIG. 13

Augmented reality apparatus

First obtaining module — 1401

Second obtaining module — 1402

Transformation module — 1403

Rendering module — 1404

FIG. 14

Model training apparatus

Obtaining module — 1501

Determining module — 1502

Calculation module — 1503

Update module — 1504

FIG. 15

1600

Execution device

| Antenna | | Antenna |

| Receiver 1601 | Transmitter 1602 |

Processor 1603

| Memory 1604 | Application processor 16031 | Communication processor 16032 |

FIG. 16

FIG. 17

FIG. 18

Neural network processing unit 1800

Instruction fetch buffer 1809

Controller 1804

Weight memory 1802

Operation circuit 1803

Accumulator 1808

Input memory 1801

Vector computation unit 1807

Unified memory 1806

Memory access controller 1805

Bus interface unit 1813

Host CPU

External memory

<div align="center">

**INTERNATIONAL SEARCH REPORT**

</div>

| | |
|---|---|
| | International application No. |
| | **PCT/CN2022/077902** |

**A. CLASSIFICATION OF SUBJECT MATTER**

G06T 7/73(2017.01)i

According to International Patent Classification (IPC) or to both national classification and IPC

**B. FIELDS SEARCHED**

Minimum documentation searched (classification system followed by classification symbols)

G06T 7/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 虚拟现实, 位姿, 变化量, 深度, 神经网络, Virtual Reality, Pose, Variance, Depth, Neural Network

**C. DOCUMENTS CONSIDERED TO BE RELEVANT**

| Category* | Citation of document, with indication, where appropriate, of the relevant passages | Relevant to claim No. |
|---|---|---|
| X | CN 110363867 A (YUTOU TECHNOLOGY (HANGZHOU) CO., LTD.) 22 October 2019 (2019-10-22)<br>   description paragraphs 45-119 | 1-4, 19-22, 37-39 |
| Y | CN 110363867 A (YUTOU TECHNOLOGY (HANGZHOU) CO., LTD.) 22 October 2019 (2019-10-22)<br>   description paragraphs 45-119 | 5-18, 23-36 |
| Y | CN 112258658 A (HEBEI UNIVERSITY OF TECHNOLOGY) 22 January 2021 (2021-01-22)<br>   description paragraphs 28-96 | 5-18, 23-36 |
| PX | CN 113066125 A (HUAWEI TECHNOLOGIES CO., LTD.) 02 July 2021 (2021-07-02)<br>   claims 1-39 | 1-39 |
| A | CN 108475442 A (SHENZHEN DJI TECHNOLOGY CO., LTD.) 31 August 2018 (2018-08-31)<br>   entire document | 1-39 |
| A | EP 2560145 A2 (LAYAR B V) 20 February 2013 (2013-02-20)<br>   entire document | 1-39 |

☐ Further documents are listed in the continuation of Box C.      ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **07 April 2022** | **20 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/077902**

| Patent document cited in search report | | | Publication date (day/month/year) | Patent family member(s) | | | Publication date (day/month/year) |
|---|---|---|---|---|---|---|---|
| CN | 110363867 | A | 22 October 2019 | None | | | |
| CN | 112258658 | A | 22 January 2021 | None | | | |
| CN | 113066125 | A | 02 July 2021 | None | | | |
| CN | 108475442 | A | 31 August 2018 | WO | 2019000325 | A1 | 03 January 2019 |
| EP | 2560145 | A2 | 20 February 2013 | EP | 2560145 | A3 | 15 March 2017 |

Form PCT/ISA/210 (patent family annex) (January 2015)

**EP 4 290 459 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110221723